(19) Europäisches Patentamt / European Patent Office / Office européen des brevets

(11) **EP 3 061 246 B1**

(12) **FASCICULE DE BREVET EUROPEEN**

(45) Date de publication et mention de la délivrance du brevet:
**13.04.2022 Bulletin 2022/15**

(21) Numéro de dépôt: **14824875.0**

(22) Date de dépôt: **21.10.2014**

(51) Classification Internationale des Brevets (IPC):
**H04N 19/463** *(2014.01)*  **H04N 19/18** *(2014.01)*
**H04N 19/105** *(2014.01)*  **H04N 19/102** *(2014.01)*
**H04N 19/157** *(2014.01)*  **H04N 19/184** *(2014.01)*

(52) Classification Coopérative des Brevets (CPC):
**H04N 19/102; H04N 19/157; H04N 19/18;
H04N 19/184; H04N 19/463**

(86) Numéro de dépôt international:
**PCT/FR2014/052673**

(87) Numéro de publication internationale:
**WO 2015/059400 (30.04.2015 Gazette 2015/17)**

(54) **PROCÉDÉ DE CODAGE ET DE DÉCODAGE D'IMAGES, DISPOSITIF DE CODAGE ET DE DÉCODAGE D'IMAGES ET PROGRAMMES D'ORDINATEUR CORRESPONDANTS**

VERFAHREN ZUR CODIERUNG UND DECODIERUNG VON BILDERN, VORRICHTUNG ZUR CODIERUNG UND DECODIERUNG VON BILDERN UND ENTSPRECHENDE COMPUTERPROGRAMME

METHOD FOR ENCODING AND DECODING IMAGES, DEVICE FOR ENCODING AND DECODING IMAGES AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2013 FR 1360444**

(43) Date de publication de la demande:
**31.08.2016 Bulletin 2016/35**

(73) Titulaire: **ORANGE
92130 Issy-les-Moulineaux (FR)**

(72) Inventeur: **HENRY, Félix
35760 Saint Gregoire (FR)**

(56) Documents cités:
- **KAZUI (FUJITSU) K ET AL: "Video coding technology proposal by Fujitsu", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/, no. XP030007554, 12 avril 2010 (2010-04-12), XP030007555, ISSN: 0000-0049**
- **GARY J SULLIVAN ET AL: "Overview of the High Efficiency Video Coding (HEVC) Standard", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 décembre 2012 (2012-12-01), pages 1649-1668, XP011487803, ISSN: 1051-8215, DOI: 10.1109/TCSVT.2012.2221191**
- **NIKOLAY N PONOMARENKO ET AL: "Prediction of signs of DCT coefficients in block-based lossy image compression", PROCEEDINGS OF SPIE, vol. 6497, 15 février 2007 (2007-02-15), pages 1-8, XP055120970, ISSN: 0277-786X, DOI: 10.1117/12.713872 cité dans la demande**
- **D. MARPE ET AL: "Context-based adaptive binary arithmetic coding in the H.264/AVC video compression standard", IEEE TRANSACTIONS ON CIRCUITS AND SYSTEMS FOR VIDEO TECHNOLOGY, vol. 13, no. 7, 1 juillet 2003 (2003-07-01), pages 620-636, XP055119784, ISSN: 1051-8215, DOI: 10.1109/TCSVT.2003.815173**

**Description**

Domaine de l'invention

La présente invention se rapporte de manière générale au domaine du traitement d'images, et plus précisément au codage et au décodage d'images numériques et de séquences d'images numériques.

Le codage/décodage d'images numériques s'applique notamment à des images issues d'au moins une séquence vidéo comprenant :

- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc...

La présente invention s'applique de manière similaire au codage/décodage d'images de type 2D ou 3D.

L'invention peut notamment, mais non exclusivement, s'appliquer au codage vidéo mis en œuvre dans les codeurs vidéo actuels AVC et HEVC et leurs extensions (MVC, 3D-AVC, MV-HEVC, 3D-HEVC, etc), et au décodage correspondant.

Art antérieur

Les codeurs vidéo actuels (MPEG, H.264, HEVC, ...) utilisent une représentation par blocs de la séquence vidéo. Les images sont découpées en blocs, lesquels sont susceptibles d'être redécoupés de façon récursive. Puis chaque bloc est codé par prédiction intra-images ou inter-images. Ainsi, certaines images sont codées par prédiction spatiale (prédiction intra), tandis que d'autres images sont codées par prédiction temporelle (prédiction inter) par rapport à une ou plusieurs images de référence codées-décodées, à l'aide d'une compensation en mouvement connue par l'homme de l'art.

Pour chaque bloc est codé un bloc résiduel, encore appelé résidu de prédiction, correspondant au bloc original diminué d'une prédiction. Les blocs résiduels sont transformés par une transformée par exemple de type transformée en cosinus discrète (DCT), puis quantifiés à l'aide d'une quantification par exemple de type scalaire. Des coefficients, dont certains sont positifs et d'autres négatifs, sont obtenus à l'issue de l'étape de quantification. Ils sont ensuite parcourus dans un ordre de lecture généralement en zigzag (comme dans la norme JPEG), ce qui permet d'exploiter le nombre important de coefficients nuls dans les hautes fréquences. A l'issue du parcours précité, une liste monodimensionnelle de coefficients est obtenue, laquelle sera appelée « résidu quantifié ». Les coefficients de cette liste sont alors codés par un codage entropique.

Le codage entropique (par exemple de type codage arithmétique ou codage de Huffman) est effectué de la façon suivante :

- une information est codée entropiquement pour indiquer l'emplacement du dernier coefficient non nul de la liste,
- pour chaque coefficient situé avant le dernier coefficient non nul, une information est codée entropiquement pour indiquer si le coefficient est nul ou pas,
- pour chaque coefficient non nul indiqué précédemment, une information est codée entropiquement pour indiquer si le coefficient est égal à un ou pas,
- pour chaque coefficient non nul et non égal à un situé avant le dernier coefficient non nul, une information d'amplitude (valeur absolue du coefficient diminuée de deux) est codée entropiquement.

Ainsi, l'amplitude de chaque coefficient est codée en tenant compte de la probabilité d'apparition de ces coefficients dans le bloc courant à coder.

En revanche, les signes qui affectent les coefficients non nuls ne sont pas codés entropiquement mais codés respectivement par un bit égal à '0' (par exemple pour le signe +) ou par un bit égal à '1' (par exemple pour le signe -). Ces bits sont inscrits dans un signal ou flux de données qui est destiné à être transmis au décodeur.

De façon connue en soi, un tel signal comprend :

- les résidus quantifiés contenus dans la liste précitée,

- des informations représentatives du mode de codage utilisé, en particulier:

  • le mode de prédiction (prédiction intra, prédiction inter, prédiction par défaut réalisant une prédiction pour laquelle aucune information n'est transmise au décodeur (« en anglais « skip »)) ;
- des informations précisant le type de prédiction (orientation, image de référence, ...) ;
- le type de découpage du bloc ;
- le type de transformée, par exemple DCT 4x4, DCT 8x8, etc...
- les informations de mouvement si nécessaire ;
- etc.

Compte tenu des nombreuses informations à signaler dans le flux, il en résulte que l'ajout systématique d'un bit de signe dans le flux à transmettre au décodeur est coûteuse en débit et nuit aux performances de compression du signal.

Une fois que le flux a été reçu par le décodeur, le décodage est fait image par image, et pour chaque image, bloc par bloc. Pour chaque bloc, les éléments correspondants du flux sont lus. La quantification inverse et la transformation inverse des coefficients des blocs sont effectuées pour produire le résidu de prédiction décodé. Puis, la prédiction du bloc est calculée et la bloc est reconstruit en ajoutant la prédiction au résidu de prédiction décodé.

Le document « Prediction of signs of DCT coefficients in block-based lossy image compression, Nikolay N. Ponomarenko ; Andriy V. Bazhyna ; Karen O. Egiazarian, Proc. SPIE 6497, Image Processing: Algorithms and Systems V, 64970L (February 27, 2007); doi:10.1117/12.713872 » propose de coder un ou plusieurs bits de signe de façon prédictive, en tenant compte de leur probabilité d'apparition. En particulier, il est choisi de prédire le signe du coefficient ayant l'amplitude la plus élevée. De même, le document "Video coding technology proposai by Fujitsu", JCTVC-A115, 1. JCT-VC MEETING (JOINT COLLABORATIVE TEAM ON VIDEO CODING OF ISO/IEC JTC1/SC29/WG11 AND ITU-TSG.16); URL: HTTP://WFTP3.ITU.INT/ AV-ARCH/JCTVC-SITE/ (12 avril 2010), propose de coder un ou plusieurs bits de signe de façon prédictive, et choisit de prédire les signes des coefficients ayant l'amplitude la plus élevée.

Une telle prédiction améliore, certes, les performances de compression du signal de données codées. Toutefois, le coefficient dont le signe est prédit ne résulte pas nécessairement d'un choix optimal, de sorte que la prédiction de signe appliquée est susceptible d'entraîner des perturbations dans le signal transmis au décodeur. De telles perturbations nuisent inévitablement à l'efficacité de la compression vidéo.

Objet et résumé de l'invention

Un des buts de l'invention est de remédier à des inconvénients de l'état de la technique précité.

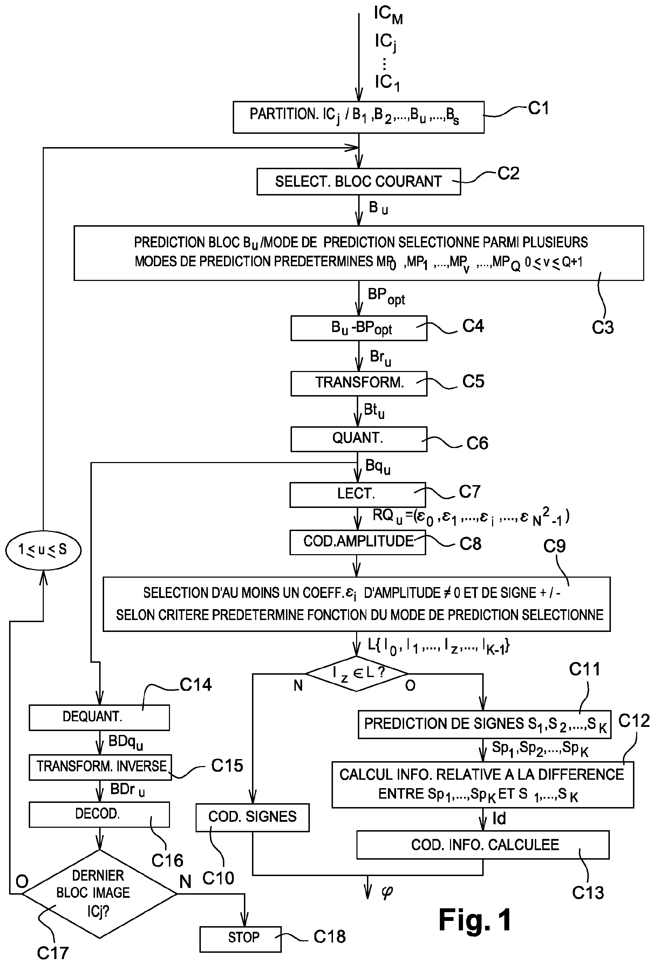

A cet effet, un objet de la présente invention concerne un procédé de codage d'au moins une image découpée en blocs, selon la revendication 1 et représenté sur la figure 1, et mettant notamment en œuvre, pour un bloc courant à coder, les étapes de :

- prédiction du bloc courant conformément à un mode de prédiction sélectionné parmi une pluralité de modes de prédiction prédéterminés,
- obtention d'un bloc prédicteur,
- détermination d'un ensemble de données résiduelles représentatif de la différence entre le bloc prédicteur obtenu et le bloc courant, les données résiduelles étant susceptibles d'avoir une amplitude et un signe.

Le procédé de codage selon l'invention est remarquable en ce qu'il met en œuvre les étapes suivantes :

- sélection, dans l'ensemble de données résiduelles, d'au moins une donnée résiduelle affectée d'une amplitude et d'un signe, à l'aide d'un critère prédéterminé qui est fonction du mode de prédiction sélectionné,
- obtention d'une valeur prédite du signe de ladite au moins une donnée résiduelle sélectionnée,
- calcul d'une information représentative de la différence entre la valeur prédite du signe et la valeur du signe de ladite au moins une donnée résiduelle sélectionnée,
- codage de l'information calculée.

Une telle disposition a pour avantage de tenir compte du mode de prédiction du bloc courant pour prédire le signe d'une ou de plusieurs données résiduelles, ce qui permet d'identifier la ou les données résiduelles dont le signe est le plus prédictible. Une telle identification étant plus fiable que dans l'art antérieur précité, elle permet d'obtenir de meilleures performances de compression du signal de données à transmettre au décodeur, et au final, une meilleure qualité de reconstruction de l'image au décodeur.

Selon un mode de réalisation particulier, l'étape d'obtention de la valeur prédite du signe de ladite au moins une donnée résiduelle sélectionnée est fonction de pixels précédemment codés puis décodés de l'image courante qui sont situés le long du bloc courant.

Une telle disposition permet ainsi de minimiser les discontinuités susceptibles d'apparaître le long des frontières du bloc courant, tout en correspondant mieux à la réalité de l'image.

Selon un autre mode de réalisation particulier, le critère prédéterminé pour sélectionner ladite au moins une donnée résiduelle consiste en une table qui associe à chacun des modes de prédiction prédéterminés une liste ordonnée des données résiduelles, l'ordre des données résiduelles d'une liste étant variable d'un mode de prédiction à l'autre.

Une telle disposition permet, pour un mode de prédiction considéré, de sélectionner facilement et précisément le ou les coefficients dont le signe correspondant est le plus prédictible, sans que la prédiction de ces signes n'entraîne de perturbations élevées dans le signal à transmettre au décodeur.

Il en résulte une augmentation des performances de compression du codeur tout en réduisant efficacement le coût de signalisation.

Les différents modes ou caractéristiques de réalisation précités peuvent être ajoutés indépendamment ou en combinaison les uns avec les autres, aux étapes du procédé de codage tel que défini ci-dessus.

L'invention concerne également un dispositif de codage d'au moins une image découpée en blocs, selon la revendication 4, et comprenant notamment, pour un bloc courant à coder :

- un module de prédiction du bloc courant conformément à un mode de prédiction sélectionné parmi une pluralité de modes de prédiction prédéterminés,
- un module de détermination d'un ensemble de données résiduelles représentatif de la différence entre un bloc prédicteur, obtenu suite à l'activation du module de prédiction, et le bloc courant, les données résiduelles étant susceptibles d'avoir une amplitude et un signe.

Un tel dispositif de codage est remarquable en ce qu'il comprend en outre :

- un module de sélection, dans l'ensemble de données résiduelles, d'au moins une donnée résiduelle affectée d'une amplitude et d'un signe, à l'aide d'un critère prédéterminé qui est fonction du mode de prédiction sélectionné,
- un module d'obtention d'une valeur prédite du signe de ladite au moins une donnée résiduelle sélectionnée,
- un module de calcul d'une information représentative de la différence entre la valeur prédite du signe et la valeur du signe de ladite au moins une donnée résiduelle sélectionnée,
- un module de codage de l'information calculée.

Un tel dispositif de codage est apte à mettre en œuvre le procédé de codage précité.

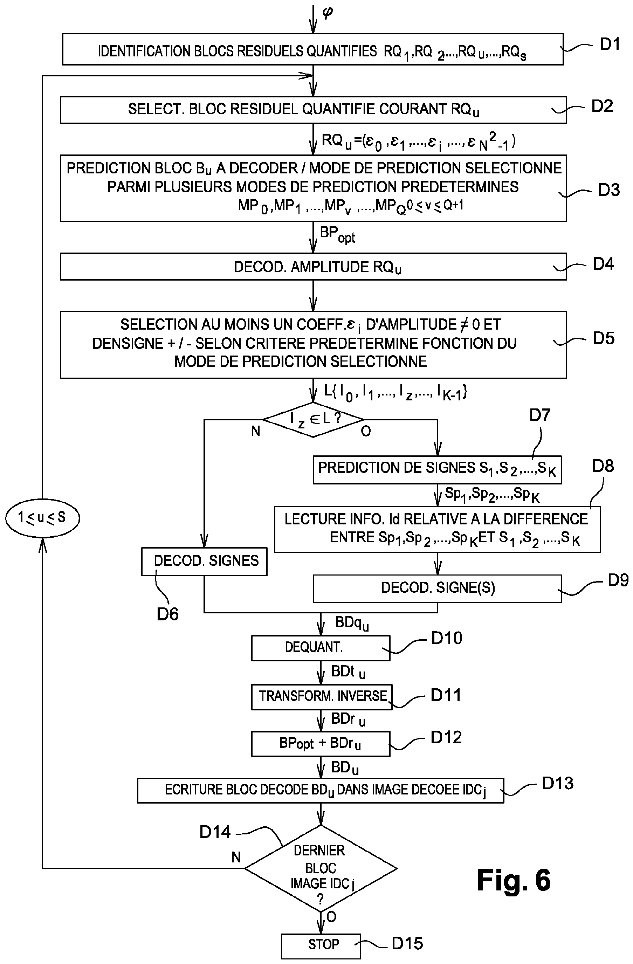

De façon correspondante, l'invention concerne aussi un procédé de décodage d'un signal de données représentatif d'au moins une image découpée en blocs, selon la revendication 7 et représenté sur la figure 6, et mettant notamment en œuvre, pour un bloc courant à décoder, les étapes de :

- détermination, dans le signal de données, d'un ensemble de données résiduelles relatif au bloc courant, au moins une donnée résiduelle de l'ensemble précité étant affectée d'une amplitude et d'un signe,
- prédiction du bloc courant conformément à un mode de prédiction sélectionné parmi une pluralité de modes de prédiction prédéterminés.

Un tel procédé de décodage est remarquable en ce qu'il met en œuvre les étapes suivantes :

- sélection, dans l'ensemble de données résiduelles, d'au moins une donnée résiduelle affectée d'une amplitude et d'un signe, à l'aide d'un critère prédéterminé qui est fonction du mode de prédiction déterminé,
- obtention d'une valeur prédite du signe de ladite au moins une donnée résiduelle sélectionnée,
- détermination, dans le signal de données, d'une information représentative de la différence entre la valeur prédite du signe et la valeur du signe de ladite au moins une donnée résiduelle sélectionnée,
- reconstruction du signe à l'aide de la valeur prédite du signe et de l'information représentative déterminée.

Selon un mode de réalisation particulier, l'étape d'obtention de la valeur prédite du signe de ladite au moins une donnée résiduelle sélectionnée est fonction de pixels précédemment décodés de l'image courante qui sont situés le long du bloc courant.

Selon un autre mode de réalisation particulier, le critère prédéterminé pour sélectionner ladite au moins une donnée résiduelle consiste en une table qui associe à un mode de prédiction déterminé une liste ordonnée des données résiduelles, l'ordre des données résiduelles d'une liste étant variable d'un mode de prédiction à l'autre.

Les différents modes ou caractéristiques de réalisation précités peuvent être ajoutés indépendamment ou en combinaison les uns avec les autres, aux étapes du procédé de décodage tel que défini ci-dessus.

Corrélativement, l'invention concerne encore un dispositif de décodage d'un signal d'un signal de données représentatif d'au moins une image découpée en blocs, selon la revendication 10, et comprenant notamment, pour un bloc courant à décoder :

- un module de détermination, dans le signal de données, d'un ensemble de données résiduelles relatif au bloc courant, au moins une donnée résiduelle de l'ensemble précité étant affectée d'une amplitude et d'un signe,
- un module de prédiction du bloc courant conformément à un mode de prédiction sélectionné parmi une pluralité de modes de prédiction prédéterminés.

Un tel dispositif de décodage est remarquable en ce qu'il comprend en outre :

- un module de sélection, dans l'ensemble de données résiduelles, d'au moins une donnée résiduelle affectée d'une amplitude et d'un signe, à l'aide d'un critère prédéterminé qui est fonction du mode de prédiction déterminé,
- un module d'obtention d'une valeur prédite du signe de ladite au moins une donnée résiduelle sélectionnée,
- un module de détermination, dans le signal de données, d'une information représentative de la différence entre la valeur prédite du signe et la valeur du signe de ladite au moins une donnée résiduelle sélectionnée,
- un module de reconstruction du signe à l'aide de la valeur prédite du signe et de l'information représentative déterminée.

Un tel dispositif de décodage est apte à mettre en œuvre le procédé de décodage précité.

L'invention concerne encore, selon la revendication 11, un programme d'ordinateur comportant des instructions pour mettre en œuvre l'un des procédés de codage et de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre de l'un des procédés de codage ou de décodage selon l'invention, tels que décrits ci-dessus.

L'invention vise également, selon la revendication 12, un support d'enregistrement lisible par un ordinateur sur lequel est enregistré un programme d'ordinateur, ce programme comportant des instructions adaptées à la mise en œuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

Le procédé de décodage, le dispositif de codage, le dispositif de décodage, les programmes d'ordinateur et les supports d'enregistrement correspondants précités présentent au moins les mêmes avantages que ceux conférés par le procédé de codage selon la présente invention.

Brève description des dessins

D'autres caractéristiques et avantages apparaîtront à la lecture d'un mode de réalisation préféré décrit en référence aux figures dans lesquelles:

- la figure 1 représente les étapes du procédé de codage selon l'invention,
- la figure 2 représente un mode de réalisation d'un dispositif de codage selon l'invention,
- la figure 3 représente un exemple de partitionnement de l'image courante en plusieurs blocs de pixels,
- la figure 4 représente un mode de réalisation selon l'invention de l'étape d'identification d'un bloc prédicteur en fonction du bloc résidu décodé courant obtenu,
- la figure 5 représente un mode de réalisation d'un dispositif de décodage selon l'invention,
- la figure 6 représente les principales étapes du procédé de décodage selon l'invention.

Description détaillée de la partie codage

Un mode de réalisation de l'invention va maintenant être décrit, dans lequel le procédé de codage selon l'invention est utilisé pour coder une image ou une séquence d'images selon un flux binaire proche de celui qu'on obtient par un codage conforme par exemple à la norme HEVC.

Dans ce mode de réalisation, le procédé de codage selon l'invention est par exemple implémenté de manière logicielle ou matérielle par modifications d'un codeur initialement conforme à la norme HEVC. Le procédé de codage selon l'invention est représenté sous la forme d'un algorithme comportant des étapes C1 à C18 telles que représentées à la **figure 1.**

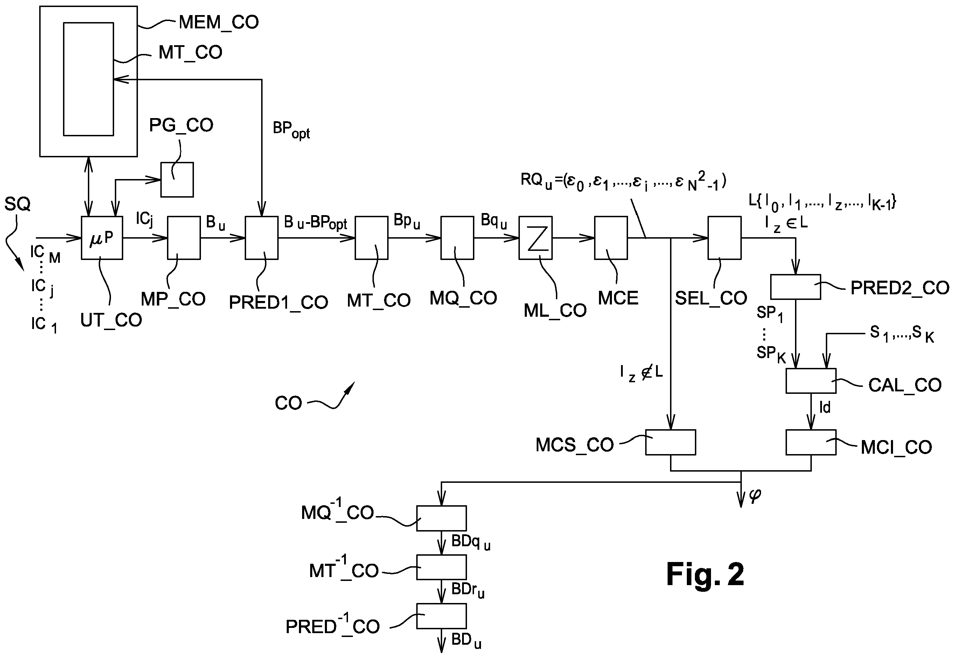

Selon le mode de réalisation de l'invention, le procédé de codage selon l'invention est implémenté dans un dispositif de codage CO représenté à la **figure 2.**

Comme illustré en **figure 2,** un tel dispositif de codage comprend une mémoire MEM_CO comprenant une mémoire tampon MT_CO, une unité de traitement UT_CO équipée par exemple d'un microprocesseur $\mu$P et pilotée par un programme d'ordinateur PG_CO qui met en œuvre le procédé de codage selon l'invention. A l'initialisation, les instructions de code du programme d'ordinateur PG_CO sont par exemple chargées dans une mémoire RAM (non représentée) avant d'être exécutées par le processeur de l'unité de traitement UT_CO.

Le procédé de codage représenté sur la **figure 1** s'applique à toute image courante d'une séquence SQ d'images à coder.

Au cours d'une étape C1 représentée à la **figure 1,** il est procédé, de façon connue en soi, au partitionnement d'une image courante $IC_j$ appartenant à la séquence SQ d'images $IC_1$, ..., $IC_j$,..., $IC_M$ ($1{\leq}j{\leq}M$), en une pluralité de blocs $B_1$, $B_2$, ..., $B_u$,..., $B_S$ ($1{\leq}u{\leq}S$), par exemple de taille 64x64 pixels. Une telle étape de partitionnement est mise en œuvre par un module logiciel de partitionnement MP_CO représenté sur la **figure 2,** lequel module est piloté par le microprocesseur $\mu$P de l'unité de traitement UT_CO.

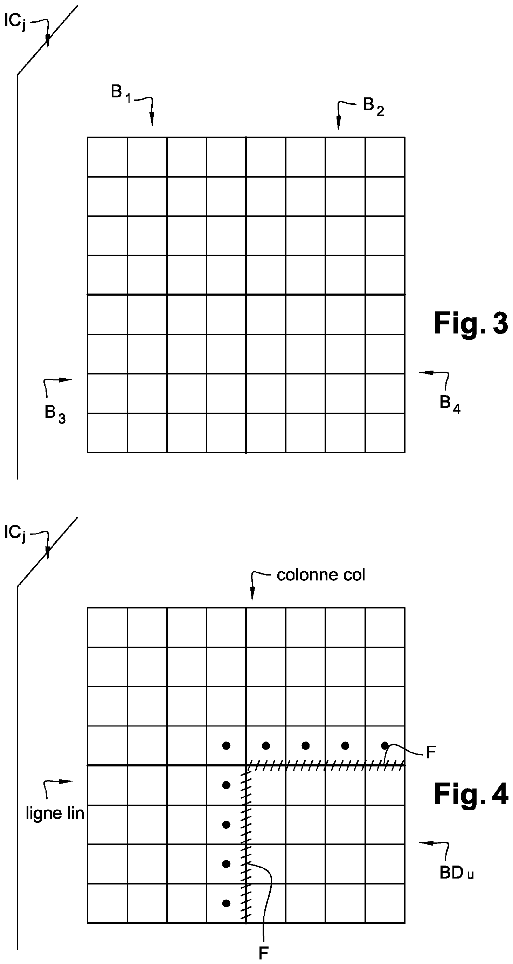

L'image $IC_j$ ainsi partitionnée est représentée à la **figure 3.** Dans l'exemple représenté, l'image $IC_j$ est partitionnée en quatre blocs $B_1$, $B_2$, $B_3$ et $B_4$.

Il convient de noter qu'au sens de l'invention, le terme « bloc » signifie unité de codage (de l'anglais « coding unit »). Cette dernière terminologie est notamment utilisée dans la norme HEVC, par exemple dans le document « B. Bross, W.-J. Han, J.-R. Ohm, G. J. Sullivan, and T. Wiegand, "High efficiency video coding (HEVC) text specification draft 10," document JCTVC-L1003 of JCT-VC, Genève, CH, 14-23 January 2013».

En particulier, une telle unité de codage regroupe des ensembles de pixels de forme rectangulaire ou carrée, encore appelés blocs, macroblocs, ou bien des ensembles de pixels présentant d'autres formes géométriques.

Lesdits blocs $B_1$, $B_2$, ..., $B_u$,..., $B_S$ sont destinés à être codés selon un ordre de parcours prédéterminé, qui est par exemple du type raster scan. Cela signifie que les blocs sont codés les uns après les autres, de la gauche vers la droite.

D'autres types de parcours sont bien sûr possibles. Ainsi, il est possible de découper l'image $IC_j$ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre

Dans l'exemple représenté sur la **figure 3,** les blocs $B_1$, $B_2$, $B_3$ et $B_4$ ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc peut par ailleurs être lui-même divisé en sous blocs qui sont eux-mêmes subdivisibles.

Au cours d'une étape C2 représentée à la **figure 1,** le codeur CO sélectionne comme bloc courant un premier bloc à coder $B_u$ de l'image $IC_j$, tel que par exemple le premier bloc $B_1$.

Au cours d'une étape C3 représentée à la **figure 1,** il est procédé à la prédiction du bloc courant $B_u$ par des techniques connues de prédiction intra et/ou inter. A cet effet, le bloc $B_u$ est prédit par rapport à au moins un bloc prédicteur conformément à un mode de prédiction sélectionné parmi une pluralité de modes de prédiction prédéterminés $MP_0$, $MP_1$,..., $MP_v$,..., $MP_Q$ où $0{\leq}v{\leq}Q+1$. Dans l'exemple représenté, les modes de prédiction prédéterminés sont de type intra et Q est égal à 4.

Un tel bloc prédicteur est par exemple un bloc de pixels qui a été déjà codé ou bien codé puis décodé ou non. Un tel bloc prédicteur est préalablement stocké dans la mémoire tampon MT_CO du codeur CO telle que représentée à la **figure 2.**

A l'issue de l'étape C3 de prédiction, un bloc prédicteur optimal $BP_{opt}$ est obtenu suite à une mise en compétition desdits modes de prédiction prédéterminés, par exemple par minimisation d'un critère débit distorsion bien connu de l'homme du métier. Le bloc $BP_{opt}$ est considéré comme une approximation du bloc courant $B_u$. Les informations relatives à cette prédiction sont destinées à être inscrites dans un signal ou flux de données à transmettre à un décodeur. De telles informations comprennent notamment le type de prédiction (inter ou intra), et le cas échéant, le mode de prédiction sélectionné, le type de partitionnement du bloc courant si ce dernier a été subdivisé, l'indice d'image de référence et le vecteur de déplacement utilisés dans le cas où un mode de prédiction inter a été sélectionné. Ces informations sont compressées par le codeur CO.

Au cours d'une étape C4 représentée à la **figure 1**, il est procédé à la comparaison des données relatives au bloc courant $B_u$ aux données du bloc prédicteur $BP_{opt}$. Plus précisément, au cours de cette étape, il est procédé classiquement au calcul de la différence entre le bloc prédicteur obtenu $BP_{opt}$ et le bloc courant $B_u$.

Un ensemble de données résiduelles, appelé bloc résidu $Br_u$ est alors obtenu à l'issue de l'étape C4.

Les étapes C3 et C4 sont mises en œuvre par un module logiciel de codage prédictif PRED1_CO représenté sur la **figure 2**, lequel module est piloté par le microprocesseur $\mu$P de l'unité de traitement UT_CO.

Au cours d'une étape C5 représentée à la **figure 1**, il est procédé à la transformation du bloc résidu $Br_u$ selon une opération classique de transformation directe telle que par exemple une transformation en cosinus discrètes de type DCT ou une transformation en ondelettes du type DWT, pour produire un bloc transformé $Bt_u$. Une telle opération est effectuée par un module logiciel MT_CO de transformée, tel que représenté **figure 2**, lequel module est piloté par le microprocesseur $\mu$P de l'unité de traitement UT_CO.

Au cours d'une étape C6 représentée à la **figure 1**, il est procédé à la quantification du bloc transformé $Bt_u$ selon une opération classique de quantification, telle que par exemple une quantification scalaire ou vectorielle. Un bloc $Bq_u$ de NxN coefficients quantifiés est alors obtenu, où N est un entier supérieur ou égal à 1. Une telle étape est effectuée au moyen d'un module logiciel de quantification MQ_CO tel que représenté à la **figure 2**, lequel module est piloté par le microprocesseur $\mu$P de l'unité de traitement UT_CO.

Au cours d'une étape C7 représentée à la **figure 1**, il est procédé à un parcours, dans un ordre prédéfini, des coefficients quantifiés du bloc $Bq_u$. Dans l'exemple représenté, il s'agit d'un parcours en zigzag classique, par ordre croissant de fréquence. Une telle étape est effectuée par un module logiciel de lecture ML_CO, tel que représenté à la **figure 2**, lequel module est piloté par le microprocesseur $\mu$P de l'unité de traitement UT_CO.

A l'issue de l'étape C7, un vecteur monodimensionnel $RQ_u = (\varepsilon_0, \varepsilon_1, ..., \varepsilon_i, ..., \varepsilon_{N^2-1})$ de coefficients est obtenu, plus connu sous l'appellation « résidu quantifié », où l'indice i varie de 0 à $N^2-1$.

Au cours d'une étape C8 représentée à la **figure 1**, il est procédé au codage des informations d'amplitude associées à chaque coefficient du vecteur monodimensionnel $RQ_u$. Dans le mode préféré de réalisation, le codage effectué est un codage entropique de type arithmétique ou de Huffman. L'étape C8 consiste alors à :

- lire le ou les symboles de l'ensemble prédéterminé de symboles qui sont associés audit bloc courant,
- associer des informations numériques, telles que des bits, au(x) symbole(s) lu(s).

Une telle étape de codage entropique est mise en œuvre par un module logiciel de codage entropique MCE représenté sur la **figure 2**, lequel module est piloté par le microprocesseur $\mu$P de l'unité de traitement UT_CO. Le module de codage entropique MCE est par exemple de type CABAC ("Context Adaptive Binary Arithmetic Coder" en anglais). Il peut également s'agir d'un codeur de Huffman connu en tant que tel.

Au cours d'une étape C9 représentée à la **figure 1**, il est procédé à la sélection d'au moins un coefficient $\varepsilon_i$ du vecteur monodimensionnel $RQ_u$ ayant une amplitude non nulle et un signe + ou -.

Selon l'invention, une telle sélection est avantageusement mise en œuvre à l'aide d'un critère prédéterminé qui est fonction du mode de prédiction sélectionné à l'étape de prédiction C3.

Une telle étape de sélection est effectuée par un module logiciel de sélection SEL_CO, tel que représenté à la **figure 2**, lequel module est piloté par le microprocesseur $\mu$P de l'unité de traitement UT_CO.

Conformément au mode de réalisation préféré de l'étape C9, ledit critère de sélection prédéterminé consiste en une table TA enregistrée dans une mémoire (non représentée) du codeur C0 qui associe à chacun desdits modes de prédiction prédéterminés une liste ordonnée des coefficients du vecteur monodimensionnel $RQ_u$, l'ordre des coefficients d'une liste étant variable d'un mode de prédiction à l'autre.

Un exemple de la table TA est représenté ci-dessous. Dans cet exemple, les coefficients $\varepsilon_0, \varepsilon_1, ..., \varepsilon_i, ..., \varepsilon_{N^2-1}$ sont au nombre de seize et il existe cinq modes de prédiction prédéterminés $MP_0, MP_1, MP_2, MP_3, MP_4$. La table TA se présente alors sous la forme suivante :

| Coefficients $\varepsilon_0$, $\varepsilon_1$, $\varepsilon_2$, $\varepsilon_3$, $\varepsilon_4$, $\varepsilon_5$, $\varepsilon_6$, $\varepsilon_7$, $\varepsilon_8$, $\varepsilon_9$, $\varepsilon_{10}$, $\varepsilon_{11}$, $\varepsilon_{12}$, $\varepsilon_{13}$, $\varepsilon_{14}$, $\varepsilon_{15}$ | | | | | | | | | | | | | | | | |
|---|---|---|---|---|---|---|---|---|---|---|---|---|---|---|---|---|
| **TA** | Ordonnancement des coefficients par indice i avec $0{\leq}i{\leq}15$ | | | | | | | | | | | | | | | |
| Modes de prédiction — $MP_0$ | 0 | 1 | 2 | 3 | 4 | 5 | 6 | 7 | 8 | 9 | 10 | 11 | 12 | 13 | 14 | 15 |
| $MP_1$ | 8 | 9 | 10 | 11 | 12 | 13 | 14 | 15 | 0 | 1 | 2 | 3 | 4 | 5 | 6 | 7 |
| $MP_2$ | 4 | 5 | 6 | 7 | 8 | 9 | 10 | 11 | 0 | 1 | 2 | 3 | 12 | 13 | 14 | 15 |
| $MP_3$ | 12 | 13 | 14 | 15 | 0 | 1 | 2 | 3 | 4 | 5 | 6 | 7 | 8 | 9 | 10 | 11 |
| $MP_4$ | 15 | 14 | 13 | 12 | 11 | 10 | 9 | 8 | 7 | 6 | 5 | 4 | 3 | 2 | 1 | 0 |

Au cours de l'étape de sélection C9, il est procédé au choix, dans la table TA, de la ligne qui correspond au mode de prédiction qui a été utilisé pour prédire le bloc courant $B_u$. Par exemple, s'il s'agit du mode de prédiction $MP_3$, la ligne d'indices de coefficients correspondant à ce mode de prédiction est sélectionnée. Les coefficients $\varepsilon_0$ à $\varepsilon_{15}$ sont alors parcourus dans l'ordre donné par la ligne d'indices de coefficients sélectionnée, soit respectivement 12, 13, 14, 15, 0, 1, 2, 3, 4, 5, 6, 7, 8, 9, 10, 11. Il est ensuite testé dans cet ordre si l'amplitude de chacun des coefficients $\varepsilon_{12}$, $\varepsilon_{13}$, $\varepsilon_{14}$, $\varepsilon_{15}$, $\varepsilon_0$, $\varepsilon_1$, $\varepsilon_2$, $\varepsilon_3$, $\varepsilon_4$, $\varepsilon_5$, $\varepsilon_6$, $\varepsilon_7$, $\varepsilon_8$, $\varepsilon_9$, $\varepsilon_{10}$, $\varepsilon_{11}$ est nulle ou pas. Les K premières valeurs d'amplitude non nulles sont retenues, où K est une valeur prédéterminée au codeur CO, telle que $0{\leq}K{\leq}N^2-1$.

Ainsi, si par exemple K vaut 2, et que les coefficients du vecteur monodimensionnel $RQ_u$ sont par exemple les suivants : $\varepsilon_0=5$, $\varepsilon_1=0$, $\varepsilon_2=-6$, $\varepsilon_3=0$, $\varepsilon_4=0$, $\varepsilon_5=0$, $\varepsilon_6=1$, $\varepsilon_7=-1$, $\varepsilon_8=0$, $\varepsilon_9=3$, $\varepsilon_{10}=0$, $\varepsilon_{11}=0$, $\varepsilon_{12}=0$, $\varepsilon_{13}=0$, $\varepsilon_{14}=-3$, $\varepsilon_{15}=1$, les deux premières valeurs d'amplitude non nulles identifiées sont 3 ($\varepsilon_{14}$) et 1 ($\varepsilon_{15}$), qui constituent ainsi un sous-ensemble de coefficients identifiés. Une liste L, contenant les indices des coefficients identifiés dans ledit sous-ensemble, est alors construite. Dans l'exemple représenté, L= {14,15}.

Selon un mode alternatif de réalisation, un ordre par amplitude non nulle croissante ou décroissante des coefficients du vecteur monodimensionnel $RQ_u$ est sélectionné en fonction du mode de prédiction prédéterminé qui a été sélectionné pour prédire le bloc courant $B_u$.

Dans le cas par exemple où il existe deux modes de prédiction prédéterminés $M_0$ et $M_1$ :

- si c'est le mode $M_0$ qui a été sélectionné pour prédire le bloc courant, les K premiers coefficients du vecteur mono-dimensionnel $RQ_u$ sont sélectionnés par amplitude non nulle décroissante,
- si c'est le mode $M_1$ qui a été sélectionné pour prédire le bloc courant, les K premiers coefficients du vecteur mono-dimensionnel $RQ_u$ sont sélectionnés par amplitude non nulle croissante.

La variante inverse est également possible. C'est-à-dire que :

- si c'est le mode $M_0$ qui a été sélectionné pour prédire le bloc courant, les K premiers coefficients du vecteur mono-dimensionnel $RQ_u$ sont sélectionnés par amplitude non nulle croissante,
- si c'est le mode $M_1$ qui a été sélectionné pour prédire le bloc courant, les K premiers coefficients du vecteur mono-dimensionnel $RQ_u$ sont sélectionnés par amplitude non nulle décroissante.

Les exemples de critère de sélection précités ne sont nullement limitatifs, à partir du moment où le critère tient compte du mode prédiction sélectionné à l'étape de prédiction C3, pour identifier les coefficients dont le signe va être le plus prédictible.

A l'issue de l'étape de sélection C9, est obtenue une liste L= {$l_0$, $l_1$, ....$l_z$,..., $l_{K-1}$} contenant les indices de K coefficients du vecteur monodimensionnel $RQ_u$, où $0{\leq}z<K$.

Au cours d'une étape C10 représentée à la **figure 1**, il est procédé de façon classique au codage des signes des coefficients du vecteur monodimensionnel $RQ_u$ dont les indices n'ont pas été retenus dans la liste L.

Une telle étape de codage est effectuée par un module logiciel de codage de signes MCS_CO, tel que représenté à la **figure 2**, lequel module est piloté par le microprocesseur $\mu P$ de l'unité de traitement UT_CO.

Dans l'exemple précité où les coefficients du vecteur monodimensionnel $RQ_u$ sont les suivants : $\varepsilon_0=5$, $\varepsilon_1=0$, $\varepsilon_2=-6$, $\varepsilon_3=0$, $\varepsilon_4=0$, $\varepsilon_5=0$, $\varepsilon_6=1$, $\varepsilon_7=-1$, $\varepsilon_8=0$, $\varepsilon_9=3$, $\varepsilon_{10}=0$, $\varepsilon_{11}=0$, $\varepsilon_{12}=0$, $\varepsilon_{13}=0$, $\varepsilon_{14}=-3$, $\varepsilon_{15}=1$, il est procédé classiquement au codage des signes des coefficients non nuls et dont les indices ne sont pas présents dans la liste L={14, 15}. Les signes +, -, +, -, + correspondant respectivement aux coefficients $\varepsilon_0$, $\varepsilon_2$, $\varepsilon_6$, $\varepsilon_7$, $\varepsilon_9$ sont alors codés de façon connue en soit. Ainsi, par exemple, le signe + est codé par un bit à zéro, tandis que le signe - est codé par un bit à un.

Au cours d'une étape C11 représentée à la **figure 1,** il est procédé à la prédiction du ou des signes des coefficients dont les indices ont été retenus dans la liste L.

Une telle étape de prédiction de signes est effectuée par un module logiciel de prédiction de signes PRED2_CO, tel que représenté à la **figure 2,** lequel module est piloté par le microprocesseur μP de l'unité de traitement UT_CO.

Dans le cas où un seul signe est prédit, une seule valeur prédite de signe Sp est obtenue.

Dans le cas où K signes $S_1$, $S_2$, ..., $S_K$ sont prédits, plusieurs valeurs prédites de signes $Sp_1$, $Sp_2$,..., $Sp_K$ sont respectivement obtenues.

Dans l'exemple précité où L= {14, 15}, deux valeurs prédites de signe $Sp_1$ et $Sp_2$ sont destinées à être obtenues.

Selon un exemple de prédiction de signe connu en tant que tel, il est procédé, pour un bloc résiduel quantifié courant $Bq_u$ considéré, à la construction d'autant de blocs décodés que de combinatoire des signes des coefficients dont les indices sont contenus dans la liste L. De façon générale, puisqu'il y a deux signes possibles + ou - pour un coefficient, il est procédé, pour un bloc résiduel quantifié courant $Bq_u$ considéré :

- à la construction de W blocs résiduels quantifiés courants $Bq_{u0}$, $Bq_{u1}$,..., $Bq_{uW-1}$, où W= $2^K$,
- au décodage des W blocs résiduels quantifiés courants $Bq_{u0}$, $Bq_{u1}$,..., $Bq_{uW-1}$ pour obtenir respectivement W blocs résiduels décodés $BDr_{u0}$, $BDr_{u1}$, ..., $BDr_{uW-1}$, à l'aide de techniques classiques de déquantification et de prédiction inverse,
- à la reconstruction de W blocs décodés $BDu_0$, $BDu_1$,..., $BDu_{W-1}$ en ajoutant respectivement aux W blocs résiduels décodés $BDr_{u0}$, $BDr_{u1}$, ..., $BDr_{uW-1}$, le bloc prédicteur $BP_{opt}$ obtenu à l'issue de l'étape de prédiction C3 précitée.

Dans l'exemple précité, il y a deux signes à prédire, le signe - affecté au coefficient $\varepsilon_{14}$ et le signe + affecté au coefficient $\varepsilon_{15}$. Ces deux signes peuvent donc prendre les valeurs {+,+}, {+,-}, {-,+} et {-,-}. Ainsi par exemple, pour la liste L= {14, 15}, sont obtenus $2^2$=4 blocs résiduels $Bq_{u0}$,$Bq_{u1}$, $Bq_{u2}$, $Bq_{u3}$ tels que :

- $Bq_{u0}$ = {5,0,-6,0,0,0,1,-1,0,3,0,0,0,3,1}
- $Bq_{u1}$ = {5,0,-6,0,0,0,1,-1,0,3,0,0,0,3,-1}
- $Bq_{u2}$ = {5,0,-6,0,0,0,1,-1,0,3,0,0,0,-3,1}
- $Bq_{u3}$ = {5,0,-6,0,0,0,1,-1,0,3,0,0,0,-3,-1}

Chacun de ces quatre blocs résiduels sont décodés de façon à obtenir respectivement quatre blocs résiduels décodés $BDr_{u0}$, $BDr_{u1}$, $BDr_{u2}$, $BDr_{u3}$. Puis, il est procédé à l'ajout du bloc prédicteur $BP_{opt}$ obtenu à l'étape de prédiction C3 précitée à chacun de ces quatre blocs résiduels décodés, ce qui permet d'obtenir quatre blocs décodés $BDu_0$, $BD_{u1}$, $BD_{u2}$, $BD_{u3}$. Parmi ces quatre blocs décodés, un seul est le véritable bloc décodé issu du codage du bloc courant Bu.

Il est ensuite procédé à un test de la vraisemblance de chacun des blocs décodés $BDu_0$, $BD_{u1}$,..., $BD_{ud}$,..., $BD_{uW-1}$, avec un critère de vraisemblance, où 0≤d<W .

Dans ce mode particulier, le test de vraisemblance consiste à appliquer un critère de minimisation de la différence entre les pixels décodés de l'image courante $IC_j$, qui sont représentés par des points sur la **figure 4,** et les pixels de chaque bloc décodé $BDu_0$, $BD_{u1}$,..., $BD_{ud}$,..., $BDu_{W-1}$ le long de leur frontière respective F représentée par des hachures sur la **figure 4.** Ce critère est un opérateur mathématique noté SM($BD_{ud}$, $IC_j$). L'opérateur SM($BD_{ud}$, $IC_j$) est représentatif de l'erreur quadratique le long de la frontière F du bloc résiduel décodé $BDr_u$ avec l'image $IC_j$.

Il s'écrit de la façon suivante :

$$SM\left(IC_j, BD_{ud}\right)$$
$$= \sum_{a=0}^{N-1} \left(BD_{ud}(0,a) - IC_j(lin-1, col+a)\right)^2$$
$$+ \sum_{a=0}^{N-1} \left(BD_{ud}(a,0) - IC_j(lin+a, col-1)\right)^2$$

où :

- $BD_{ud}$ est le bloc décodé considéré de taille NxN pixels,
- $BD_{ud}(n,m)$ est la valeur du pixel du bloc décodé $BD_{ud}$ situé sur la nième ligne et la mième colonne de ce bloc,

- $IC_j$ est l'image courante,
- $IC_j(k,l)$ est la valeur du pixel de l'image $IC_j$ situé sur la k ième ligne et la l ième colonne de cette image, et (lin,col) sont les coordonnées du bloc décodé $BD_{ud}$ dans l'image $IC_j$.

A titre d'alternative, on peut utiliser un critère simplifié, où la moyenne des pixels de l'image $IC_j$ le long de la frontière F est comparée à la moyenne des pixels du bloc décodé $BD_{ud}$. L'opérateur $SM(BD_{ud}, IC_j)$ s'écrit alors :

$$SM\big(BD_{ud}, IC_j\big) = abs\left( \frac{1}{(2N-1)} \sum_{a=0}^{N-1} \Big( IC_j(lin-1, col+a) + IC_j(lin+a, col-1) \Big) \right.$$
$$\left. - \frac{1}{N^2} \sum_{a=0}^{N-1} \sum_{b=0}^{N-1} \big( BD_{ud}(a,b) \big) \right)$$

où abs() représente la valeur absolue.

Il est ensuite procédé à la détermination du bloc décodé $BD_{udmin}$ qui minimise l'un des deux critères précités choisis, tel que :

$$dmin = \mathrm{argmin}_d \, SM\big(BD_{ud}, PDIC_j\big)$$

où $PDIC_j$ représente la portion de l'image $IC_j$ qui a été décodée avant le bloc courant $B_u$.

Il est procédé à l'identification du bloc résiduel décodé, parmi les blocs résiduels décodés $BDr_{u0}$, $BDr_{u1}$, ..., $BDr_{uW-1}$, qui est associé au bloc décodé $BD_{udmin}$.

Pour ce bloc résiduel décodé identifié, les signes associés aux coefficients dont les indices $I_0$ à $I_{K-1}$ sont contenus dans la liste L sont alors considérés comme les valeurs prédites des signes des coefficients dudit bloc résiduel associé au bloc résiduel décodé identifié.

Dans l'exemple précité, si on suppose que $BD_{udmin}$ = $BDu_0$, le bloc résiduel associé est le bloc $Bq_{u1}$ = {5,0,-6,0,0,0,1,-1,0,3,0,0,0,3,1}. Les signes affectés respectivement aux quatorzième et quinzième coefficients $\varepsilon_{14}$ et $\varepsilon_{15}$ étant respectivement les signes +,+, ces deux signes constituent les valeurs prédites de signe $Sp_1$ et $Sp_2$ des signes $S_1$ et $S_2$ des coefficients $\varepsilon_{14}$ et $\varepsilon_{15}$, dont les indices sont contenus dans la liste L.

Au cours d'une étape C12 représentée à la **figure 1,**

- si une seule valeur prédite de signe $S_p$ a été obtenue à l'issue de l'étape C11, il est procédé au calcul d'une information Id représentative de la différence entre la valeur prédite Sp dudit signe et la valeur du signe S à coder,
- si plusieurs valeurs prédites de signe $Sp_1$ à $Sp_K$ ont été obtenues à l'issue de l'étape C11, il est procédé au calcul d'une information Id représentative de la différence entre les valeurs prédites de signe $Sp_1$ à $Sp_K$ et les valeurs des signes $S_1$ à $S_K$ à coder.

Une telle étape de calcul est effectuée par un module logiciel de calcul CAL_CO, tel que représenté à la **figure 2,** lequel module est piloté par le microprocesseur $\mu$P de l'unité de traitement UT_CO.

Au cours d'une étape C13 représentée à la **figure 1,** il est procédé au codage de l'information Id calculée. A cet effet:

- si la prédiction d'un signe effectuée à l'étape C11 est exacte, l'information Id prend par exemple la valeur binaire 0,
- si la prédiction d'un signe effectuée à l'étape C11 n'est pas exacte, l'information Id prend par exemple la valeur binaire 1.

Dans l'exemple précité concernant les coefficients $\varepsilon_{14}$ et $\varepsilon_{15}$ dont les indices ont été retenus dans la liste L, la prédiction des signes est fausse puisque les valeurs prédites de signe $Sp_1$ et $Sp_2$ sont respectivement {+,+} tandis que les valeurs des signes des coefficients $\varepsilon_{14}$ et $\varepsilon_{15}$ sont respectivement {-,+}. Par conséquent, l'indicateur Id prend les valeurs binaires 01 pour indiquer que la prédiction du signe du coefficient $\varepsilon_{14}$ est fausse et que la prédiction du signe du coefficient $\varepsilon_{15}$ est exacte.

Une telle étape de calcul est effectuée par un module logiciel de codage d'informations MCI_CO, tel que représenté à la **figure 2,** lequel module est piloté par le microprocesseur $\mu$P de l'unité de traitement UT_CO.

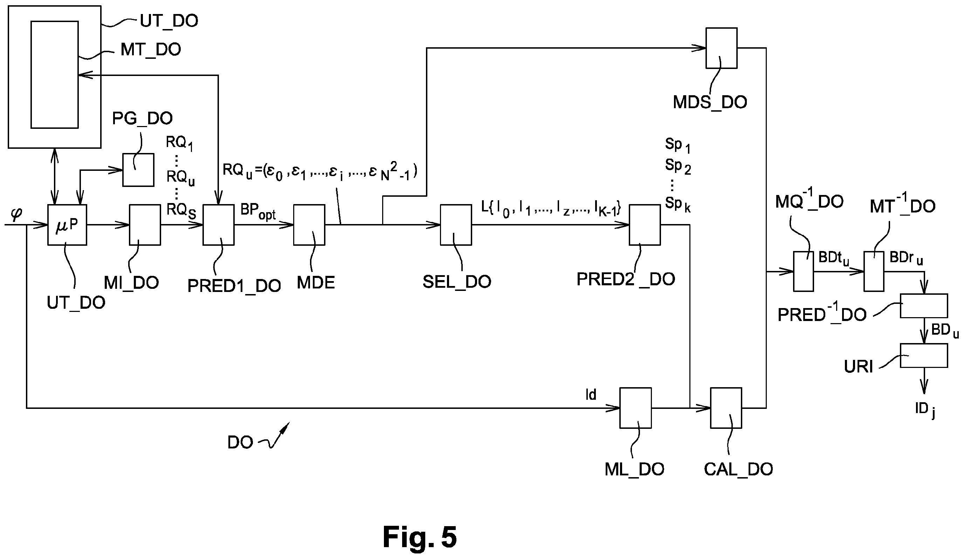

A l'issue des étapes de codage C10 et C13, un signal ou flux de données φ qui contient l'ensemble des données encodées du bloc de coefficients quantifiés $Bq_u$ et l'identifiant Id encodé est alors délivré. Un tel flux est ensuite transmis par un réseau de communication (non représenté), à un terminal distant. Celui-ci comporte le décodeur DO représenté à la **figure 5**. De façon connue en soi, le flux φ comprend en outre certaines informations encodées par le codeur CO, telles que le type de prédiction (inter ou intra), et le cas échéant, le mode de prédiction sélectionné, le type de partitionnement du bloc si ce dernier a été partitionné, l'indice d'image de référence et le vecteur de déplacement utilisés dans le mode de prédiction inter.

Au cours d'une étape C14 représentée à la **figure 1,** il est procédé à la déquantification du bloc $Bq_u$ selon une opération classique de déquantification, qui est l'opération inverse de la quantification effectuée à l'étape C6. Un bloc de coefficients déquantifiés $BDq_u$ est alors obtenu.

Une telle étape de déquantification est effectuée par un module logiciel de quantification inverse $MT^{-1}\_CO$, tel que représenté à la **figure 2,** lequel module est piloté par le microprocesseur µP de l'unité de traitement UT_CO.

Au cours d'une étape C15 représentée à la **figure 1,** il est procédé à la transformation inverse du bloc de coefficients déquantifiés $BDq_u$ qui est l'opération inverse de la transformation directe effectuée à l'étape C5 ci-dessus. Un bloc résidu décodé $BDr_u$ est alors obtenu.

Une telle opération est effectuée par un module logiciel $MT^{-1}\_CO$ de transformée inverse, tel que représenté **figure 2,** lequel module est piloté par le microprocesseur µP de l'unité de traitement UT_CO.

Au cours d'une étape C16 représentée à la **figure 1,** il est procédé à la construction du bloc décodé $BD_u$ en ajoutant au bloc prédicteur $BP_{opt}$ obtenu à l'étape C3 précitée le bloc résidu décodé $BDr_u$. Il est à noter que ce dernier bloc est le même que le bloc décodé obtenu à l'issue du procédé de décodage de l'image $IC_j$ qui sera décrit plus loin dans la description. Le bloc décodé $BD_u$ est alors stocké dans la mémoire tampon MT_CO de la **figure 2,** afin d'être utilisé par le codeur CO comme bloc prédicteur d'un bloc suivant à coder.

Une telle étape est mise en œuvre par un module logiciel de codage prédictif inverse $PRED^{-1}\_CO$ représenté sur la **figure 2,** lequel module est piloté par le microprocesseur µP de l'unité de traitement UT_CO.

Au cours d'une étape C17 représentée à la **figure 1,** le codeur CO teste si le bloc courant $B_u$ qui vient d'être codé est le dernier bloc de l'image $IC_j$.

Si le bloc courant est le dernier bloc de l'image $IC_j$, au cours d'une étape suivante C18 représentée à la **figure 1,** il est mis fin au procédé de codage.

Si tel n'est pas le cas, il est procédé à nouveau à l'étape de sélection C2 du bloc suivant à coder conformément à l'ordre de parcours raster scan précité, puis les étapes C3 à C17 sont réitérées pour ce bloc suivant sélectionné.

Les étapes de codage qui viennent d'être décrites ci-dessus sont mises en œuvre pour tous les blocs $B_1$, $B_2$, ..., $B_u$,..., $B_S$ à coder de l'image courante $IC_j$ considérée.

Description détaillée de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme HEVC. Le procédé de décodage selon l'invention est représenté sous la forme d'un algorithme comportant des étapes D1 à D15 telles que représentées à la **figure 6.**

Comme illustré en **figure 5,** le décodeur DO selon ce mode de réalisation de l'invention comprend une mémoire MEM_DO comprenant une mémoire tampon MT_DO, une unité de traitement UT_DO équipée par exemple d'un microprocesseur µP et pilotée par un programme d'ordinateur PG_DO qui met en œuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 6** s'applique à toute image courante d'une séquence SQ d'images à décoder.

A cet effet, des informations représentatives de l'image courante $IC_j$ à décoder sont identifiées dans un signal ou flux de données φ reçu au décodeur, tel que délivré à la suite du procédé de codage de la **figure 1.**

En référence à la **figure 6,** au cours d'une étape D1, il est procédé à l'identification dans ledit flux φ des résidus quantifiés $RQ_1$, $RQ_2$,..., $RQ_u$, ...$RQ_S$ $(1 \leq u \leq S)$ associée respectivement aux blocs $B_1$, $B_2$, ..., $B_u$,..., $B_S$ codés précédemment conformément au parcours raster scan précité, conformément au procédé de codage de la **figure 1.**

Une telle étape d'identification est mise en œuvre par un module d'identification MI_DO d'analyse de flux, tel que représenté à la **figure 5,** ledit module étant piloté par le microprocesseur µP de l'unité de traitement UT_DO.

Lesdits résidus quantifiés $RQ_1$, $RQ_2$, ..., $RQ_u$,..., $RQ_S$ sont destinés à être décodés selon un ordre de parcours prédéterminé, qui est par exemple séquentiel, c'est à dire que lesdits résidus sont destinés à être décodés l'un après l'autre conformément à l'ordre raster scan où ils ont été codés.

D'autres types de parcours que celui qui vient d'être décrit ci-dessus sont bien sûr possibles et dépendent de l'ordre de parcours choisi au codage, dont des exemples ont été mentionnés plus haut.

Dans le mode préféré de réalisation, les blocs à décoder ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc peut par ailleurs être lui-même divisé en sous blocs qui sont eux-mêmes subdivisibles.

Au cours d'une étape D2 représentée à la **figure 6,** le décodeur DO de la **figure 5** sélectionne comme bloc courant un premier résidu quantifié $RQ_u = (\varepsilon_0, \varepsilon_1,..., \varepsilon_i,..., \varepsilon_{N^2-1})$ de coefficients à décoder, où l'indice i varie de 0 à $N^2-1$.

Au cours d'une étape D3 représentée à la **figure 6,** il est procédé à la prédiction du bloc courant $B_u$ à décoder par des techniques connues de prédiction intra et/ou inter. A cet effet, le bloc $B_u$ à décoder est prédit par rapport à au moins un bloc prédicteur conformément à un mode de prédiction sélectionné parmi une pluralité de modes de prédiction prédéterminés $MP_0$, $MP_1$,..., $MP_v$,..., $MP_Q$ où $0 \leq v \leq Q+1$. Dans l'exemple représenté, les modes de prédiction prédéterminés sont de type intra et Q est égal à 4.

Selon une première variante de réalisation, le mode de prédiction sélectionné est directement lu dans le flux $\varphi$ dans le cas où le codeur CO de la **figure 2** a signalé ce mode au décodeur DO de la **figure 5.**

Selon une deuxième variante de réalisation, le mode de prédiction est sélectionné au décodeur DO par mise en compétition desdits modes de prédiction prédéterminés, par exemple par minimisation d'un critère débit distorsion bien connu de l'homme du métier.

Un tel bloc prédicteur est par exemple un bloc de pixels qui a été déjà décodé ou non. Un tel bloc prédicteur est préalablement stocké dans la mémoire tampon MT_DO du décodeur DO telle que représentée à la **figure 5.**

A l'issue de l'étape D3 de prédiction, un bloc prédicteur optimal $BP_{opt}$ conforme au mode de prédiction sélectionné est obtenu. Le bloc $BP_{opt}$ est une approximation du bloc courant $B_u$ à décoder. Les informations relatives à cette prédiction sont lues dans le flux de données $\varphi$. De telles informations comprennent notamment le type de prédiction (inter ou intra), le type de partitionnement du bloc courant si ce dernier a été subdivisé, l'indice d'image de référence et le vecteur de déplacement utilisés dans le cas où un mode de prédiction inter a été sélectionné. Ces informations seront ultérieurement décodées de façon classique.

L'étape D3 est mise en œuvre par un module logiciel de décodage prédictif PRED1_DO représenté sur la **figure 5,** lequel module est piloté par le microprocesseur µP de l'unité de traitement UT_DO.

Au cours d'une étape D4 représentée à la **figure 6,** il est procédé au décodage des informations d'amplitude associées à chaque coefficient du vecteur monodimensionnel $RQ_u$. Dans le mode préféré de réalisation, le décodage effectué est un décodage entropique de type arithmétique ou de Huffman. L'étape D4 consiste alors à :

- lire le ou les symboles de l'ensemble prédéterminé de symboles qui sont associés audit bloc courant à décoder,
- associer des informations numériques, telles que des bits, au(x) symbole(s) lu(s).

Une telle étape de décodage entropique est mise en œuvre par un module logiciel de décodage entropique MDE représenté sur la **figure 5,** lequel module est piloté par le microprocesseur µP de l'unité de traitement UT_DO. Le module de décodage entropique MDE est par exemple de type CABAC. Il peut également s'agir d'un décodeur de Huffman connu en tant que tel.

Au cours d'une étape D5 représentée à la **figure 6,** il est procédé à la sélection d'au moins un coefficient du vecteur monodimensionnel $RQ_u$ ayant une amplitude non nulle et un signe + ou -.

Selon l'invention, une telle sélection est avantageusement mise en œuvre à l'aide d'un critère prédéterminé qui est fonction du mode de prédiction sélectionné à l'étape de prédiction D3.

L'étape de sélection D5 est en tout point identique à l'étape de sélection C9 effectuée au codage en référence à la **figure 1.**

Une telle étape de sélection est effectuée par un module logiciel de sélection SEL_DO, tel que représenté à la **figure 5,** lequel module est piloté par le microprocesseur µP de l'unité de traitement UT_DO.

Conformément au mode de réalisation préféré de l'étape D5, ledit critère de sélection prédéterminé consiste en une table TA stockée dans une mémoire (non représentée) du décodeur DO qui associe à chacun desdits modes de prédiction prédéterminés une liste ordonnée des coefficients du vecteur monodimensionnel $RQ_u$, l'ordre des coefficients d'une liste étant variable d'un mode de prédiction à l'autre.

Un exemple de la table TA est représenté ci-dessous. Dans cet exemple, les coefficients $\varepsilon_0, \varepsilon_1,..., \varepsilon_i,..., \varepsilon_{N^2-1}$ sont au nombre de seize et il existe cinq modes de prédiction prédéterminés $MP_0$, $MP_1$, $MP_2$, $MP_3$, $MP_4$. La table TA se présente alors sous la forme suivante :

| TA | Coefficients $\varepsilon_0, \varepsilon_1, \varepsilon_2, \varepsilon_3, \varepsilon_4, \varepsilon_5, \varepsilon_6, \varepsilon_7, \varepsilon_8, \varepsilon_9, \varepsilon_{10}, \varepsilon_{11}, \varepsilon_{12}, \varepsilon_{13}, \varepsilon_{14}, \varepsilon_{15}$ | | | | | | | | | | | | | | | |
|---|---|---|---|---|---|---|---|---|---|---|---|---|---|---|---|---|
| | Ordonnancement des coefficients par indice i avec $0 \leq i \leq 15$ | | | | | | | | | | | | | | | |
| $MP_0$ | 0 | 1 | 2 | 3 | 4 | 5 | 6 | 7 | 8 | 9 | 10 | 11 | 12 | 13 | 14 | 15 |
| $MP_1$ | 8 | 9 | 10 | 11 | 12 | 13 | 14 | 15 | 0 | 1 | 2 | 3 | 4 | 5 | 6 | 7 |
| $MP_2$ | 4 | 5 | 6 | 7 | 8 | 9 | 10 | 11 | 0 | 1 | 2 | 3 | 12 | 13 | 14 | 15 |
| $MP_3$ | 12 | 13 | 14 | 15 | 0 | 1 | 2 | 3 | 4 | 5 | 6 | 7 | 8 | 9 | 10 | 11 |
| $MP_4$ | 15 | 14 | 13 | 12 | 11 | 10 | 9 | 8 | 7 | 6 | 5 | 4 | 3 | 2 | 1 | 0 |

(Modes de prédiction)

Au cours de l'étape de sélection D5, il est procédé au choix, dans la table TA, de la ligne qui correspond au mode de prédiction qui a été utilisé pour prédire le bloc courant $B_u$ à décoder. Par exemple, s'il s'agit du mode de prédiction $MP_3$, la ligne d'indices de coefficients correspondant à ce mode de prédiction est sélectionnée. Les coefficients $\varepsilon_0$ à $\varepsilon_{15}$ sont alors parcourus dans l'ordre donné par la ligne d'indices de coefficients sélectionnée, soit respectivement 12, 13, 14, 15, 0, 1, 2, 3, 4, 5, 6, 7, 8, 9, 10, 11. Il est ensuite testé dans cet ordre si l'amplitude de chacun des coefficients $\varepsilon_{12}$, $\varepsilon_{13}$, $\varepsilon_{14}$, $\varepsilon_{15}$, $\varepsilon_0$, $\varepsilon_1$, $\varepsilon_2$, $\varepsilon_3$, $\varepsilon_4$, $\varepsilon_5$, $\varepsilon_6$, $\varepsilon_7$, $\varepsilon_8$, $\varepsilon_9$, $\varepsilon_{10}$, $\varepsilon_{11}$ est nulle ou pas. Les K premières valeurs d'amplitude non nulle sont retenues, où K est une valeur prédéterminée au décodeur DO, telle que $0 \leq K \leq N^2-1$.

Ainsi, si par exemple K vaut 2, et que les coefficients du vecteur monodimensionnel $RQ_u$ sont par exemple les suivants : $\varepsilon_0=5$, $\varepsilon_1=0$, $\varepsilon_2=-6$, $\varepsilon_3=0$, $\varepsilon_4=0$, $\varepsilon_5=0$, $\varepsilon_6=1$, $\varepsilon_7=-1$, $\varepsilon_8=0$, $\varepsilon_9=3$, $\varepsilon_{10}=0$, $\varepsilon_{11}=0$, $\varepsilon_{12}=0$, $\varepsilon_{13}=0$, $\varepsilon_{14}=-3$, $\varepsilon_{15}=1$, les deux premières valeurs d'amplitude non nulles identifiées sont 3 ($\varepsilon_{14}$) et 1 ($\varepsilon_{15}$), qui constituent ainsi un sous-ensemble de coefficients identifiés. Une liste $L= \{l_0, l_1,..., l_z,..., l_{K-1}\}$ ($0 \leq z < K$) contenant les indices de K coefficients identifiés dans ledit sous-ensemble, est alors construite. Dans l'exemple représenté où K=2, L= {14,15}.

Selon un mode alternatif de réalisation, un ordre par amplitude non nulle croissante ou décroissante des coefficients du vecteur monodimensionnel $RQ_u$ est sélectionné en fonction du mode de prédiction prédéterminé qui a été sélectionné pour prédire le bloc courant $B_u$ à décoder.

Dans le cas par exemple où il existe deux modes de prédiction prédéterminés $M_0$ et $M_1$ :

- si c'est le mode $M_0$ qui a été sélectionné pour prédire le bloc courant, les K premiers coefficients du vecteur mono-dimensionnel $RQ_u$ sont sélectionnés par amplitude non nulle décroissante,
- si c'est le mode $M_1$ qui a été sélectionné pour prédire le bloc courant, les K premiers coefficients du vecteur mono-dimensionnel $RQ_u$ sont sélectionnés par amplitude non nulle croissante.

La variante inverse est également possible. C'est-à-dire que :

- si c'est le mode $M_0$ qui a été sélectionné pour prédire le bloc courant, les K premiers coefficients du vecteur mono-dimensionnel $RQ_u$ sont sélectionnés par amplitude non nulle croissante,
- si c'est le mode $M_1$ qui a été sélectionné pour prédire le bloc courant, les K premiers coefficients du vecteur mono-dimensionnel $RQ_u$ sont sélectionnés par amplitude non nulle décroissante.

Les exemples de critère de sélection précités ne sont nullement limitatifs, à partir du moment où le critère tient compte du mode prédiction sélectionné à l'étape de prédiction D3, pour identifier les coefficients dont le signe va être le plus prédictible.

A l'issue de l'étape de sélection D5, est obtenue une liste $L = \{l_0, l_1,..., l_z,..., l_{K-1}\}$ ($0 \leq z < K$) contenant les indices de K coefficients du vecteur monodimensionnel $RQ_u$.

Au cours d'une étape D6 représentée à la **figure 6,** il est procédé de façon classique au décodage des signes des coefficients du vecteur monodimensionnel $RQ_u$ dont les indices n'ont pas été retenus dans la liste L.

Une telle étape de décodage est effectuée par un module logiciel de décodage de signes MDS_DO tel que représenté à la **figure 5,** lequel module est piloté par le microprocesseur $\mu P$ de l'unité de traitement UT_DO.

Dans l'exemple précité où les coefficients du vecteur monodimensionnel $RQ_u$ sont les suivants : $\varepsilon_0=5$, $\varepsilon_1=0$, $\varepsilon_2=-6$, $\varepsilon_3=0$, $\varepsilon_4=0$, $\varepsilon_5=0$, $\varepsilon_6=1$, $\varepsilon_7=-1$, $\varepsilon_8=0$, $\varepsilon_9=3$, $\varepsilon_{10}=0$, $\varepsilon_{11}=0$, $\varepsilon_{12}=0$, $\varepsilon_{13}=0$, $\varepsilon_{14}=-3$, $\varepsilon_{15}=1$, il est procédé classiquement au décodage des signes des coefficients non nuls et dont les indices ne sont pas présents dans la liste L={14, 15}. Les signes +, -, +, -, + correspondant respectivement aux coefficients $\varepsilon_0$, $\varepsilon_2$, $\varepsilon_6$, $\varepsilon_7$, $\varepsilon_9$ sont alors décodés. De façon connue en soit le signe + est reconstruit par lecture dans le flux $\varphi$ d'un bit à zéro, tandis que le signe - est reconstruit par lecture dans le flux $\varphi$ d'un bit à un.

Au cours d'une étape D7 représentée à la **figure 6,** il est procédé à la prédiction du ou des signes des coefficients dont les indices ont été retenus dans la liste L.

Une telle étape de prédiction de signes est effectuée par un module logiciel de prédiction de signes PRED2_DO tel que représenté à la **figure 5,** lequel module est piloté par le microprocesseur $\mu$P de l'unité de traitement UT_DO. Ladite étape de prédiction de signes D7 est en tout point identique à l'étape C11 de prédiction de signes effectuée au codage en référence à la **figure 1.**

Dans le cas où un seul signe est prédit, une seule valeur prédite de signe Sp est obtenue.

Dans le cas où K signes $S_1$, $S_2$, ..., $S_K$ sont prédits, plusieurs valeurs prédites de signes $Sp_1$, $Sp_2$,..., $Sp_K$ sont respectivement obtenues.

Dans l'exemple précité où L= {14, 15}, deux valeurs prédites de signe $Sp_1$ et $Sp_2$ sont destinées à être obtenues.

Selon un exemple de prédiction de signe connu en tant que tel, il est procédé, pour un bloc résiduel quantifié courant $Bq_u$ considéré, à la construction d'autant de blocs décodés que de combinatoires des signes des coefficients dont les indices sont contenus dans la liste L. De façon générale, puisqu'il y a deux signes possibles + ou - pour un coefficient, il est procédé, pour un bloc résiduel quantifié courant $Bq_u$ considéré :

- à la construction de W blocs résiduels quantifiés courants $Bq_{u0}$, $Bq_{u1}$,..., $Bq_{uW-1}$ où W= $2^K$,
- au décodage des W blocs résiduels quantifiés courants $Bq_{u0}$, $Bq_{u1}$,..., $Bq_{uW-1}$ pour obtenir respectivement W blocs résiduels décodés $BDr_{u0}$, $BDr_{u1}$, ..., $BDr_{uW-1}$, à l'aide de techniques classiques de déquantification et de prédiction inverse,
- à la reconstruction de W blocs décodés $BDu_0$, $BDu_1$,..., $BDu_{W-1}$ en ajoutant respectivement aux W blocs résiduels décodés $BDr_{u0}$, $BDr_{u1}$, ..., $BDr_{uW-1}$, le bloc prédicteur $BP_{opt}$ obtenu à l'issue de l'étape de prédiction D3 précitée.

Dans l'exemple précité, il y a deux signes à prédire, le signe - affecté au coefficient $\varepsilon_{14}$ et le signe + affecté au coefficient $\varepsilon_{15}$. Ces deux signes peuvent donc prendre les valeurs {+,+}, {+,-}, {-,+} et {-,-}. Ainsi par exemple, pour la liste L= {14, 15}, sont obtenus $2^2$=4 blocs résiduels $Bq_{u0}$,$Bq_{u1}$, $Bq_{u2}$, $Bq_{u3}$ tels que :

- $Bq_{u1}$ = {5,0,-6,0,0,0,1,-1,0,3,0,0,0,3,1}
- $Bq_{u1}$ = {5,0,-6,0,0,0,1,-1,0,3,0,0,0,3,-1}
- $Bq_{u2}$ = {5,0,-6,0,0,0,1,-1,0,3,0,0,0,-3,1}
- $Bq_{u3}$ = {5,0,-6,0,0,0,1,-1,0,3,0,0,0,-3,-1}

Chacun de ces quatre blocs résiduels sont décodés de façon à obtenir respectivement quatre blocs résiduels décodés $BDr_{u0}$, $BDr_{u1}$, $BDr_{u2}$, $BDr_{u3}$. Puis, il est procédé à l'ajout du bloc prédicteur $BP_{opt}$ obtenu à l'étape de prédiction D3 précitée à chacun de ces quatre blocs résiduels décodés, ce qui permet d'obtenir quatre blocs décodés $BDu_0$, $BD_{u1}$, $BD_{u2}$, $BD_{u3}$. Parmi ces quatre blocs décodés, un seul est le véritable bloc décodé tel qu'obtenu à l'issue du décodage du bloc courant $B_u$ à décoder.

Il est ensuite procédé à un test de la vraisemblance de chacun des blocs décodés $BDu_0$, $BD_{u1}$,..., $BD_{ud}$,..., $BD_{uW-1}$, avec un critère de vraisemblance.

Dans ce mode particulier, le test de vraisemblance consiste à appliquer un critère de minimisation de la différence entre les pixels décodés de l'image courante $IC_j$, qui sont représentés par des points sur la figure 4, et les pixels de chaque bloc décodé $BDu_0$, $BD_{u1}$,..., $BD_{ud}$,..., $BD_{uW-1}$ le long de leur frontière respective F représentée par des hachures sur la figure 4. Ce critère est un opérateur mathématique noté $SM(BD_{ud}, IC_j)$. L'opérateur $SM(BD_{ud}, IC_j)$ est représentatif de l'erreur quadratique le long de la frontière F du bloc résiduel décodé $BDr_u$ avec l'image $IC_j$.

Il s'écrit de la façon suivante :

$$SM\left(IC_j, BD_{ud}\right)$$
$$= \sum_{a=0}^{N-1} \left(BD_{ud}(0,a) - IC_j(lin-1, col+a)\right)^2$$
$$+ \sum_{a=0}^{N-1} \left(BD_{ud}(a,0) - IC_j(lin+a, col-1)\right)^2$$

où :

- BD$_{ud}$ est le bloc décodé considéré de taille NxN pixels,
- BD$_{ud}$(n,m) est la valeur du pixel du bloc décodé BD$_{ud}$ situé sur la nième ligne et la mième colonne de ce bloc,
- IC$_j$ est l'image courante,
- IC$_j$(k,l) est la valeur du pixel de l'image IC$_j$ situé sur la k ième ligne et la l ième colonne de cette image, et (lin,col) sont les coordonnées du bloc décodé BD$_{ud}$ dans l'image IC$_j$.

A titre d'alternative, on peut utiliser un critère simplifié, où la moyenne des pixels de l'image IC$_j$ le long de la frontière F est comparée à la moyenne des pixels du bloc décodé BD$_{ud}$. L'opérateur SM(BD$_{ud}$, IC$_j$) s'écrit alors :

$$SM\left(BD_{ud}, IC_j\right) = abs\left(\frac{1}{(2N-1)}\sum_{a=0}^{N-1}\left(IC_j(lin-1, col+a) + IC_j(lin+a, col-1)\right)\right.$$
$$\left. - \frac{1}{N^2}\sum_{a=0}^{N-1}\sum_{b=0}^{N-1}\left(BD_{ud}(a,b)\right)\right)$$

où abs() représente la valeur absolue.

Il est ensuite procédé à la détermination du bloc décodé BD$_{udmin}$ qui minimise l'un des deux critères précités choisis, tel que :

$$dmin = argmin_d\, SM\left(BD_{ud}, PDIC_j\right)$$

où PDIC$_j$ représente la portion de l'image IC$_j$ qui a été décodée avant le bloc courant B$_u$ à décoder.

Il est procédé à l'identification du bloc résiduel décodé, parmi les blocs résiduels décodés BDr$_{u0}$, BDr$_{u1}$, ..., BDr$_{uW-1}$, qui est associé au bloc décodé BD$_{udmin}$.

Pour ce bloc résiduel décodé identifié, les signes associés aux coefficients dont les indices I$_0$ à I$_{K-1}$ sont contenus dans la liste L sont alors considérés comme les valeurs prédites des signes des coefficients dudit bloc résiduel associé au bloc résiduel décodé identifié.

Dans l'exemple précité, si on suppose que BD$_{udmin}$ = BDu$_0$, le bloc résiduel associé est le bloc Bq$_{u1}$ = {5,0,-6,0,0,0,1,-1,0,3,0,0,0,3,1}. Les signes affectés respectivement aux quatorzième et quinzième coefficients $\varepsilon_{14}$ et $\varepsilon_{15}$ étant respectivement les signes +,+, ces deux signes constituent les valeurs prédites de signe Sp$_1$ et Sp$_2$ des signes S$_1$ et S$_2$ des coefficients $\varepsilon_{14}$ et $\varepsilon_{15}$, dont les indices sont contenus dans la liste L.

Au cours d'une étape D8 représentée à la **figure 6,** il est procédé à la lecture dans le flux φ d'une information Id représentative de la différence entre :

- la valeur prédite Sp dudit signe et la valeur du signe S à décoder, si une seule valeur prédite de signe S$_p$ a été obtenue à l'issue de l'étape D7,
- les valeurs prédites de signe Sp$_1$ à Sp$_K$ et respectivement les valeurs des signes S$_1$ à S$_K$ à décoder, si plusieurs valeurs prédites de signe Sp$_1$ à Sp$_K$ ont été obtenues à l'issue de l'étape D7.

Une telle étape de lecture est effectuée par un module logiciel de lecture ML_DO tel que représenté à la **figure 5,** lequel module est piloté par le microprocesseur μP de l'unité de traitement UT_DO.

Au cours d'une étape D9 représentée à la **figure 6,** il est procédé au décodage de l'information Id lue précédemment. A cet effet:

- si la prédiction d'un signe effectuée à l'étape D7 est exacte, l'information Id lue est par exemple un bit à 0,
- si la prédiction d'un signe effectuée à l'étape D7 n'est pas exacte, l'information Id lue est par exemple un bit à 1.

Dans l'exemple précité concernant les coefficients $\varepsilon_{14}$ et $\varepsilon_{15}$ dont les indices ont été retenus dans la liste L, la prédiction des signes est fausse puisque les valeurs prédites de signe Sp$_1$ et Sp$_2$ sont respectivement {+,+} tandis que les valeurs des signes des coefficients $\varepsilon_{14}$ et $\varepsilon_{15}$ sont respectivement {-,+}. Par conséquent, l'information Id lue est « 01 » pour indiquer que la prédiction du signe du coefficient $\varepsilon_{14}$ est fausse et que la prédiction du signe du coefficient $\varepsilon_{15}$ est

exacte.

Une telle étape de décodage de signes est effectuée par un module logiciel de calcul CAL_DO tel que représenté à la **figure 5,** lequel module est piloté par le microprocesseur $\mu$P de l'unité de traitement UT_DO.

Au cours d'une étape D10 représentée à la **figure 6,** il est procédé à la déquantification du résidu quantifié RQ$_u$ selon une opération classique de déquantification, qui est en tout point identique à l'étape de déquantification effectuée à l'étape C14 de la **figure 1.** Un bloc déquantifié décodé BDt$_u$ est alors obtenu.

Une telle étape de déquantification est effectuée par un module logiciel de quantification inverse MQ$^{-1}$_DO tel que représenté à la **figure 5,** lequel module est piloté par le microprocesseur $\mu$P de l'unité de traitement UT_DO.

Au cours d'une étape D11 représentée à la **figure 6,** il est procédé à la transformation inverse du bloc de coefficients déquantifiés BDt$_u$, qui est en tout point identique à l'étape de transformation inverse effectuée à l'étape C15 de la **figure 1.** Un bloc résidu décodé BDr$_u$ est alors obtenu.

Une telle opération est effectuée par un module logiciel MT$^{-1}$_DO de transformée inverse, tel que représenté **figure 5,** lequel module est piloté par le microprocesseur $\mu$P de l'unité de traitement UT_DO.

Au cours d'une étape D12 représentée à la **figure 6,** il est procédé à la reconstruction du bloc courant B$_u$ en ajoutant au bloc résiduel courant décodé BDr$_u$ le bloc prédicteur BP$_{opt}$ obtenu à l'étape D3.

Ladite étape D12 est mise en œuvre par un module logiciel de prédiction inverse PRED$^{-1}$_DO représenté sur la **figure 5,** lequel module est piloté par le microprocesseur $\mu$P de l'unité de traitement UT_DO.

Un bloc décodé BD$_u$ est alors obtenu et stocké dans la mémoire tampon MT_DO de la **figure 5,** afin d'être utilisé par le décodeur DO comme bloc prédicteur d'un bloc suivant à décoder.

Au cours d'une étape D13 représentée à la **figure 6,** ledit bloc décodé BD$_u$ est écrit dans une image décodée ID$_j$. Une telle étape est mise en œuvre un module logiciel URI de reconstruction d'image tel que représenté sur la **figure 5,** ledit module étant piloté par le microprocesseur $\mu$P du module de traitement UT_DO.

Au cours d'une étape D14 représentée à la **figure 6,** le décodeur DO teste si le bloc courant BD$_u$ qui vient d'être décodé est le dernier bloc contenu dans le flux $\varphi$.

Si tel est le cas, au cours d'une étape D15 représentée à la **figure 6,** il est mis fin au procédé de décodage.

Si tel n'est pas le cas, il est procédé, au cours de l'étape D2, à la sélection du bloc résiduel suivant à décoder conformément à l'ordre de parcours raster scan précité.

Les étapes de décodage qui viennent d'être décrites ci-dessus sont mises en œuvre pour tous les blocs B$_1$, B$_2$, ..., B$_u$,..., B$_S$ à décoder de l'image courante IC$_j$ considérée.

Il va de soi que les modes de réalisation qui ont été décrits ci-dessus ont été donnés à titre purement indicatif et nullement limitatif, et que de nombreuses modifications peuvent être facilement apportées par l'homme de l'art.

**Revendications**

1.  Procédé de codage d'au moins une image (IC$_j$) découpée en blocs, mettant en œuvre, pour un bloc courant (B$_u$) à coder, les étapes de :

    - prédiction (C3) du bloc courant conformément à un mode de prédiction sélectionné parmi une pluralité de modes de prédiction prédéterminés (MP$_0$, MP$_1$,..., MP$_v$,..., MP$_Q$),
    - obtention (C3) d'un bloc prédicteur (BP$_{opt}$),
    - détermination (C4) d'un bloc de données résiduelles (BR$_u$) représentatif de la différence entre le bloc prédicteur obtenu et le bloc courant, lesdites données résiduelles étant susceptibles d'avoir une amplitude et un signe,
    - calcul (C5) d'un bloc transformé (Bt$_u$) par transformation du bloc de données résiduelles,
    - calcul (C6) d'un bloc de NxN coefficients quantifiés (Bq$_u$) par quantification du bloc transformé,
    - parcours (C7), dans un ordre prédéfini, des coefficients quantifiés, à l'issue duquel est obtenu un vecteur monodimensionnel de N$^2$ coefficients ($\varepsilon_0$, $\varepsilon_1$,..., $\varepsilon_1$,..., $\varepsilon_{N^2-1}$),
    - codage entropique (C8) des informations d'amplitude associées à chacun desdits coefficients,
    - balayage (C9) des N$^2$ coefficients dans un ordre prédéterminé,
    - sélection (C9) dans ledit ordre prédéterminé de K premiers coefficients affectés d'une amplitude non nulle et d'un signe, où K est une valeur prédéterminée telle que $0 \le K \le N^2-1$,
    - obtention (C11) de K valeurs prédites (Sp$_1$, Sp$_2$,..., Sp$_K$) du signe de respectivement les K premiers coefficients balayés,
    - calcul (C12) d'une information représentative de la différence entre lesdites K valeurs prédites de signe (Sp$_1$, Sp$_2$,..., Sp$_K$) et respectivement les valeurs de signe correspondantes (S$_1$, S$_2$,..., S$_K$) des K premiers coefficients balayés,
    - codage (C13) de ladite information calculée,
    - codage (C10) des signes des coefficients qui n'ont pas été sélectionnés, ledit procédé de codage étant **caractérisé en ce que** l'étape de balayage (C9) sélectionne ledit ordre prédéterminé en fonction dudit mode de prédiction sélectionné.

2. Procédé de codage selon la revendication 1, dans lequel l'étape d'obtention desdites K valeurs prédites de signe est fonction de pixels précédemment codés puis décodés de l'image courante qui sont situés le long (F) du bloc courant.

3. Procédé de codage selon la revendication 1 ou la revendication 2, dans lequel les étapes de balayage et de sélection sont mises en œuvre à partir d'une table (TA) qui associe à chacun desdits modes de prédiction prédéterminés une liste ordonnée desdits coefficients, l'ordre des coefficients d'une liste étant variable d'un mode de prédiction à l'autre.

4. Dispositif (CO) de codage d'au moins une image découpée en blocs, comprenant, pour un bloc courant à coder :

- des moyens (PRED1_CO) de prédiction du bloc courant conformément à un mode de prédiction sélectionné parmi une pluralité de modes de prédiction prédéterminés ($MP_0$, $MP_1$,..., $MP_v$,..., $MP_Q$),
- des moyens (PRED1_CO) de détermination d'un bloc de données résiduelles ($BR_u$) représentatif de la différence entre un bloc prédicteur, obtenu suite à l'activation desdits moyens de prédiction, et le bloc courant, lesdites données résiduelles étant susceptibles d'avoir une amplitude et un signe,
- des moyens (MT_CO) de calcul d'un bloc transformé ($Bt_u$) par transformation du bloc de données résiduelles,
- des moyens (MQ_CO) de calcul d'un bloc de NxN coefficients quantifiés ($Bq_u$) par quantification du bloc transformé,
- des moyens (ML_CO) de parcours, dans un ordre prédéfini, des coefficients quantifiés, à l'issue duquel est obtenu un vecteur monodimensionnel de $N^2$ coefficients ($\varepsilon_0$, $\varepsilon_1$,..., $\varepsilon_1$,..., $\varepsilon_{N^2-1}$),
- des moyens (MCE) de codage entropique des informations d'amplitude associées à chacun desdits coefficients,
- des moyens de balayage des $N^2$ coefficients dans un ordre prédéterminé,
- des moyens (SEL_CO) de sélection, dans ledit ordre prédéterminé, de K premiers coefficients affectés d'une amplitude non nulle et d'un signe, où K est une valeur prédéterminée telle que $0 \leq K \leq N^2-1$,
- des moyens (PRED2_CO) d'obtention de K valeurs prédites du signe de respectivement les K premiers coefficients balayés,
- des moyens (CAL_CO) de calcul d'une information (Id) représentative de la différence entre lesdites K valeurs prédites de signe et les valeurs de signe correspondantes des K premiers coefficients balayés,
- des moyens (MCI_CO) de codage de ladite information calculée,
- des moyens (MCS_CO) de codage des signes des coefficients qui n'ont pas été sélectionnés, ledit dispositif de codage étant **caractérisé en ce que** les moyens de balayage sélectionnent ledit ordre prédéterminé en fonction dudit mode de prédiction sélectionné.

5. Programme d'ordinateur comportant des instructions de code de programme pour l'exécution des étapes du procédé de codage selon l'une quelconque des revendications 1 à 3, lorsque ledit programme est exécuté sur un ordinateur.

6. Support d'enregistrement lisible par un ordinateur sur lequel est enregistré un programme d'ordinateur comprenant des instructions pour l'exécution des étapes du procédé de codage selon l'une quelconque des revendications 1 à 3, lorsque ledit programme est exécuté sur un ordinateur.

7. Procédé de décodage d'un signal de données ($\varphi$) représentatif d'au moins une image ($IC_j$) découpée en blocs, mettant en œuvre, pour un bloc courant ($B_u$) à décoder, les étapes de :

- détermination (D2), dans ledit signal de données, d'un vecteur monodimensionnel de $N^2$ coefficients quantifiés ($\varepsilon_0$, $\varepsilon_1$,..., $\varepsilon_i$,..., $\varepsilon_{N^2-1}$) relatif audit bloc courant, au moins un coefficient dudit vecteur étant affecté d'une amplitude et d'un signe,
- prédiction (D3) du bloc courant conformément à un mode de prédiction sélectionné parmi une pluralité de modes de prédiction prédéterminés ($MP_0$, $MP_1$,..., $MP_v$,..., $MP_Q$),
- décodage entropique (D4) des informations d'amplitude associées à chacun desdits $N^2$ coefficients,
- balayage (D5) des $N^2$ coefficients dans un ordre prédéterminé,
- sélection (D5), dans ledit ordre prédéterminé, de K premiers coefficients affectés d'une amplitude non nulle et d'un signe, où K est une valeur prédéterminée telle que $0 \leq K \leq N^2-1$,
- obtention (D7) de K valeurs prédites ($Sp_1$, $Sp_2$,..., $Sp_K$) du signe de respectivement les K premiers coefficients balayés,
- détermination (D8), dans ledit signal de données ($\varphi$), d'une information (Id) représentative de la différence entre lesdites K valeurs prédites de signe ($Sp_1$, $Sp_2$,..., $Sp_K$) et respectivement les valeurs de signe correspondantes ($S_1$, $S_2$,..., $S_K$) des K premiers coefficients balayés,

- reconstruction (D9) des K signes à l'aide des K valeurs prédites de signe et de ladite information représentative correspondante,
- décodage (D6) des signes des coefficients qui n'ont pas été sélectionnés,
- calcul (D10) d'un bloc déquantifié décodé ($BDt_u$) par déquantification du vecteur monodimensionnel,
- calcul (D11) d'un bloc résidu décodé ($BDr_u$) par transformation du bloc déquantifié décodé,
- reconstruction (D12) du bloc courant en ajoutant au bloc résidu décodé un bloc prédicteur obtenu à l'issue de ladite prédiction, ledit procédé de décodage étant **caractérisé en ce que** l'étape de balayage (D5) sélectionne ledit ordre prédéterminé en fonction dudit mode de prédiction sélectionné.

8. Procédé de décodage selon la revendication 7, dans lequel l'étape d'obtention desdites K valeurs prédites de signe est fonction de pixels précédemment décodés de l'image courante qui sont situés le long (F) du bloc courant.

9. Procédé de décodage selon la revendication 7 ou la revendication 8, dans lequel les étapes de balayage et de sélection sont mises en œuvre à partir d'une table (TA) qui associe à un mode de prédiction déterminé une liste ordonnée desdits coefficients, l'ordre des coefficients d'une liste étant variable d'un mode de prédiction à l'autre.

10. Dispositif (DO) de décodage d'un signal de données ($\varphi$) représentatif d'au moins une image ($IC_j$) découpée en blocs, comprenant, pour un bloc courant à décoder :

   - des moyens (MI_DO) de détermination, dans ledit signal de données, d'un vecteur monodimensionnel de $N^2$ coefficients quantifiés ($\varepsilon_0$, $\varepsilon_1$,..., $\varepsilon_i$,..., $\varepsilon_{N^2-1}$) relatif audit bloc courant, au moins un coefficient dudit vecteur étant affecté d'une amplitude et d'un signe,
   - des moyens (PRED1_DO) de prédiction du bloc courant conformément à un mode de prédiction sélectionné parmi une pluralité de modes de prédiction prédéterminés ($MP_0$, $MP_1$,..., $MP_v$,..., $MP_Q$),
   - des moyens (MDE) décodage entropique des informations d'amplitude associées à chacun desdits $N^2$ coefficients,
   - des moyens de balayage des $N^2$ coefficients dans un ordre prédéterminé,
   - des moyens (SEL_DO) de sélection, dans ledit ordre prédéterminé, de K premiers coefficients affectés d'une amplitude non nulle et d'un signe, où K est une valeur prédéterminée telle que $0 \leq K \leq N^2-1$,
   - des moyens (PRED2_DO) d'obtention de K valeurs prédites du signe de respectivement les K premiers coefficients balayés, - des moyens (ML_DO) de détermination, dans ledit signal de données, d'une information (Id) représentative de la différence entre lesdites K valeurs prédites de signe et respectivement les valeurs de signe correspondantes des K premiers coefficients balayés,
   - des moyens (CAL_DO) de reconstruction des K signes à l'aide des K valeurs prédites de signe et de ladite information représentative correspondante,
   - des moyens (MDS_DO) de décodage des signes des coefficients qui n'ont pas été sélectionnés,
   - des moyens ($MQ^{-1}$_DO) de calcul d'un bloc déquantifié décodé ($BDt_u$) par déquantification du vecteur monodimensionnel,
   - des moyens ($MT^{-1}$_DO) de calcul d'un bloc résidu décodé ($BDr_u$) par transformation du bloc déquantifié décodé,
   - des moyens ($PRED^{-1}$_DO) de reconstruction du bloc courant en ajoutant au bloc résidu décodé un bloc prédicteur obtenu à l'issue de ladite prédiction, ledit dispositif de décodage étant **caractérisé en ce que** les moyens de balayage sélectionnent ledit ordre prédéterminé en fonction dudit mode de prédiction sélectionné.

11. Programme d'ordinateur comportant des instructions pour mettre en œuvre le procédé de décodage selon l'une quelconque des revendications 7 à 9, lorsque ledit procédé de décodage est exécuté sur un ordinateur.

12. Support d'enregistrement lisible par un ordinateur sur lequel est enregistré un programme d'ordinateur comprenant des instructions pour l'exécution des étapes du procédé de décodage selon l'une quelconque des revendications 7 à 9, lorsque ledit programme est exécuté sur un ordinateur.

**Patentansprüche**

1. Verfahren zur Codierung mindestens eines in Blöcke aufgeteilten Bildes ($IC_j$), das für einen zu codierenden aktuellen Block ($B_u$) die folgenden Schritte umsetzt:

- Vorhersagen (C3) des aktuellen Blocks entsprechend einem Vorhersagemodus, der aus einer Vielzahl vorgegebener Vorhersagemodi ($MP_0$, $MP_1$,..., $MP_v$, ..., $MP_Q$) ausgewählt wird,
- Erhalten (C3) eines Vorhersageblocks ($BP_{opt}$),
- Ermitteln (C4) eines Restdatenblocks ($BR_u$), der für die Differenz zwischen dem erhaltenen Vorhersageblock und dem aktuellen Block repräsentativ ist, wobei die Restdaten eine Amplitude und ein Vorzeichen haben können,
- Berechnen (C5) eines transformierten Blocks ($Bt_u$) durch Transformation des Restdatenblocks,
- Berechnen (C6) eines Blocks von NxN quantifizierten Koeffizienten ($Bq_u$) durch Quantifizierung des transformierten Blocks,
- Durchsuchen (C7) der quantifizierten Koeffizienten in einer definierten Reihenfolge, nach dessen Ablauf ein eindimensionaler Vektor von $N^2$ Koeffizienten ($\varepsilon_0$, $\varepsilon_1$,..., $\varepsilon_i$,..., $\varepsilon_{N^2-1}$) erhalten wird,
- entropisches Codieren (C8) der Amplitudeninformationen, die mit jedem der Koeffizienten verknüpft sind,
- Abtasten (C9) der $N^2$ Koeffizienten in einer vorgegebenen Reihenfolge,
- Auswählen (C9) von K ersten Koeffizienten, die mit einer Nichtnullamplitude und einem Vorzeichen versehen sind, in der vorgegebenen Reihenfolge, wobei K ein vorgegebener Wert wie $0 \leq K \leq N^2-1$ ist,
- Erhalten (C11) von K vorhergesagten Werten ($Sp_1$, $Sp_2$,..., $Sp_K$) des Vorzeichens der jeweils abgetasteten K ersten Koeffizienten,
- Berechnen (C12) einer Information, die für die Differenz zwischen den K vorhergesagten Vorzeichenwerten ($Sp_1$, $Sp_2$,..., $Sp_K$) und jeweils den entsprechenden Vorzeichenwerten ($S_1$, $S_2$,..., $S_K$) der abgetasteten K ersten Koeffizienten repräsentativ ist,
- Codieren (C13) der berechneten Information,
- Codieren (C10) der Vorzeichen der Koeffizienten, die nicht ausgewählt wurden,

wobei das Verfahren zur Codierung **dadurch gekennzeichnet ist, dass** der Schritt des Abtastens (C9) die vorgegebene Reihenfolge in Abhängigkeit vom ausgewählten Vorhersagemodus auswählt.

2. Verfahren zur Codierung nach Anspruch 1, wobei der Schritt des Erhaltens der K vorhergesagten Vorzeichenwerte abhängig ist von zuvor codierten und anschließend decodierten Pixeln des aktuellen Bildes, die sich entlang (F) des aktuellen Blocks befinden.

3. Verfahren zur Codierung nach Anspruch 1 oder Anspruch 2, wobei die Schritte des Abtastens und des Auswählens anhand einer Tabelle (TA) umgesetzt werden, die jeden der vorgegebenen Vorhersagemodi mit einer geordneten Liste der Koeffizienten verknüpft, wobei die Reihenfolge der Koeffizienten einer Liste von einem Vorhersagemodus zum anderen variabel ist.

4. Vorrichtung (CO) zur Codierung mindestens eines in Blöcke aufgeteilten Bildes, das für einen zu codierenden aktuellen Block umfasst:

- Mittel (PRED1_CO) zum Vorhersagen des aktuellen Blocks entsprechend einem Vorhersagemodus, der aus einer Vielzahl vorgegebener Vorhersagemodi ($MP_0$, $MP_1$,..., $MP_v$,..., $MP_Q$) ausgewählt wird,
- Mittel (PRED1_CO) zum Ermitteln eines Restdatenblocks ($BR_u$), der für die Differenz zwischen einem Vorhersageblock, der nach Aktivierung der Vorhersagemittel erhalten wird, und dem aktuellen Block repräsentativ ist, wobei die Restdaten eine Amplitude und ein Vorzeichen haben können,
- Mittel (MT_CO) zum Berechnen eines transformierten Blocks ($Bt_u$) durch Transformation des Restdatenblocks,
- Mittel (MQ_CO) zum Berechnen eines Blocks von NxN quantifizierten Koeffizienten ($Bq_u$) durch Quantifizierung des transformierten Blocks,
- Mittel (ML_CO) zum Durchsuchen der quantifizierten Koeffizienten in einer definierten Reihenfolge, nach dessen Ablauf ein eindimensionaler Vektor von $N^2$ Koeffizienten ($\varepsilon_0$, $\varepsilon_1$,..., $\varepsilon_i$,..., $\varepsilon_{N^2-1}$) erhalten wird,
- Mittel (MCE) zum entropischen Codieren der Amplitudeninformationen, die mit jedem der Koeffizienten verknüpft sind,
- Mittel zum Abtasten der $N^2$ Koeffizienten in einer vorgegebenen Reihenfolge,
- Mittel (SEL_CO) zum Auswählen von K ersten Koeffizienten, die mit einer Nichtnullamplitude und einem Vorzeichen versehen sind, in der vorgegebenen Reihenfolge, wobei K ein vorgegebener Wert wie $0 \leq K \leq N^2-1$ ist,
- Mittel (PRED2_CO) zum Erhalten von K vorhergesagten Werten des Vorzeichens der jeweils abgetasteten K ersten Koeffizienten,
- Mittel (CAL_CO) zum Berechnen einer Information (Id), die für die Differenz zwischen den K vorhergesagten Vorzeichenwerten und den entsprechenden Vorzeichenwerten der abgetasteten K ersten Koeffizienten repräsentativ ist,

- Mittel (MCI_CO) zum Codieren der berechneten Information,
- Mittel (MCS CO) zum Codieren der Vorzeichen der Koeffizienten, die nicht ausgewählt wurden,

wobei die Vorrichtung zur Codierung **dadurch gekennzeichnet ist, dass** die Mittel zum Abtasten die vorgegebene Reihenfolge in Abhängigkeit vom ausgewählten Vorhersagemodus auswählen.

5. Computerprogramm, das Programmcodeanweisungen für die Ausführung der Schritte des Verfahrens zur Codierung nach einem der Ansprüche 1 bis 3 umfasst, wenn das Programm auf einem Computer ausgeführt wird.

6. Speichermedium, das durch einen Computer lesbar ist, auf dem ein Computerprogramm gespeichert ist, das Anweisungen für die Ausführung der Schritte des Verfahrens zur Codierung nach einem der Ansprüche 1 bis 3 umfasst, wenn das Programm auf einem Computer ausgeführt wird.

7. Verfahren zur Decodierung eines für mindestens ein in Blöcke aufgeteiltes Bild ($IC_j$) repräsentativen Datensignals ($\varphi$), das für einen zu decodierenden aktuellen Block ($B_u$) ist, die Schritte umsetzt:

- Ermitteln (D2) eines eindimensionalen Vektors von $N^2$ quantifizierten Koeffizienten ($\varepsilon_0$, $\varepsilon_1$,..., $\varepsilon_i$,..., $\varepsilon_{N^2-1}$) zum aktuellen Block im Datensignal, wobei mindestens ein Koeffizient des Vektors mit einer Amplitude und einem Vorzeichen versehen ist,
- Vorhersagen (D3) des aktuellen Blocks entsprechend einem ausgewählten Vorhersagemodus unter einer Vielzahl vorgegebener Vorhersagemodi ($MP_0$, $MP_1$,..., $MP_v$,..., $MP_Q$),
- entropisches Decodieren (D4) der Amplitudeninformationen, die mit jedem der $N^2$ Koeffizienten verknüpft sind,
- Abtasten (D5) der $N^2$ Koeffizienten in einer vorgegebenen Reihenfolge,
- Auswählen (D5) von K ersten Koeffizienten, die mit einer Nichtnullamplitude und einem Vorzeichen versehen sind, in der vorgegebenen Reihenfolge, wobei K ein vorgegebener Wert wie $0 \leq K \leq N^2-1$ ist,
- Erhalten (D7) von K vorhergesagten Werten ($Sp_1$, $Sp_2$,..., $Sp_K$) des Vorzeichens der jeweils abgetasteten K ersten Koeffizienten,
- Ermitteln (D8) einer Information (Id) im Datensignal ($\varphi$), die für die Differenz zwischen den K vorhergesagten Vorzeichenwerten ($Sp_1$, $Sp_2$,..., $Sp_K$) und jeweils den entsprechenden Vorzeichenwerten ($S_1$, $S_2$,...,$S_K$) der abgetasteten K ersten Koeffizienten repräsentativ ist,
- Rekonstruieren (D9) der K Vorzeichen mithilfe der vorhergesagten K Vorzeichenwerte und der entsprechenden repräsentativen Information,
- Decodieren (D6) der Vorzeichen der Koeffizienten, die nicht ausgewählt wurden,
- Berechnen (D10) eines decodierten dequantifizierten Blocks ($BDt_u$) durch Dequantifizierung des eindimensionalen Vektors,
- Berechnen (D11) eines decodierten Restblocks ($BDr_u$) durch Transformation des decodierten dequantifizierten Blocks,
- Rekonstruieren (D12) des aktuellen Blocks durch Hinzufügen eines Vorhersageblocks, der nach Ablauf der Vorhersage erhalten wird, zum decodierten Restblock, wobei das Verfahren zur Decodierung **dadurch gekennzeichnet ist, dass** der Schritt des Abtastens (D5) die vorgegebene Reihenfolge in Abhängigkeit vom ausgewählten Vorhersagemodus auswählt.

8. Verfahren zur Decodierung nach Anspruch 7, wobei der Schritt des Erhaltens der K vorhergesagten Vorzeichenwerte abhängig ist von zuvor decodierten Pixeln des aktuellen Bildes, die sich entlang (F) des aktuellen Blocks befinden.

9. Verfahren zur Decodierung nach Anspruch 7 oder Anspruch 8, wobei die Schritte des Abtastens und des Auswählens anhand einer Tabelle (TA) umgesetzt werden, die einen bestimmten Vorhersagemodus mit einer geordneten Liste der Koeffizienten verknüpft, wobei die Reihenfolge der Koeffizienten einer Liste von einem Vorhersagemodus zum anderen variabel ist.

10. Vorrichtung (DO) zur Decodierung eines für mindestens ein in Blöcke aufgeteiltes Bild ($IC_j$) repräsentativen Datensignals ($\varphi$), das für einen zu decodierenden aktuellen Block umfasst:

- Mittel (MI DO) zum Ermitteln eines eindimensionalen Vektors von $N^2$ quantifizierten Koeffizienten ($\varepsilon_0$, $\varepsilon_1$,..., $\varepsilon_i$,..., $\varepsilon_{N^2-1}$) zum aktuellen Block im Datensignal, wobei mindestens ein Koeffizient des Vektors mit einer Amplitude und einem Vorzeichen versehen ist,
- Mittel (PRED1_DO) zum Vorhersagen des aktuellen Blocks entsprechend einem ausgewählten Vorhersagemodus unter einer Vielzahl vorgegebener Vorhersagemodi ($MP_0$, $MP_1$,..., $MP_v$,..., $MP_Q$),

- Mittel (MDE) zum entropischen Decodieren der Amplitudeninformationen, die mit jedem der $N^2$ Koeffizienten verknüpft sind,
- Mittel zum Abtasten der $N^2$ Koeffizienten in einer vorgegebenen Reihenfolge,
- Mittel (SEL DO) zum Auswählen von K ersten Koeffizienten, die mit einer Nichtnullamplitude und einem Vorzeichen versehen sind, in der vorgegebenen Reihenfolge, wobei K ein vorgegebener Wert wie $0 \leq K \leq N^2-1$ ist,
- Mittel (PRED2_DO) zum Erhalten von K vorhergesagten Werten des Vorzeichens der jeweils K ersten abgetasteten Koeffizienten,
- Mittel (ML_DO) zum Ermitteln einer Information (Id) im Datensignal, die für die Differenz zwischen den K vorhergesagten Vorzeichenwerten und jeweils den entsprechenden Vorzeichenwerten der abgetasteten K ersten Koeffizienten repräsentativ ist,
- Mittel (CAL_DO) zum Rekonstruieren der K Vorzeichen mithilfe der vorhergesagten K Vorzeichenwerte und der entsprechenden repräsentativen Information,
- Mittel (MDS DO) zum Decodieren der Vorzeichen der Koeffizienten, die nicht ausgewählt wurden,
- Mittel ($MQ^{-1}$_DO) zum Berechnen eines decodierten dequantifizierten Blocks ($BDt_u$) durch Dequantifizierung des eindimensionalen Vektors,
- Mittel ($MT^{-1}$_DO) zum Berechnen eines decodierten Restblocks ($BDr_u$) durch Transformation des decodierten dequantifizierten Blocks,
- Mittel ($PRED^{-1}$_DO) zum Rekonstruieren des aktuellen Blocks durch Hinzufügen eines Vorhersageblocks, der nach Ablauf der Vorhersage erhalten wird, zum decodierten Restblock,

wobei das Verfahren zur Decodierung **dadurch gekennzeichnet ist, dass** die Mittel zum Abtasten die vorgegebene Reihenfolge in Abhängigkeit vom ausgewählten Vorhersagemodus auswählen.

11. Computerprogramm, das Programmcodeanweisungen für die Umsetzung des Verfahrens zur Decodierung nach einem der Ansprüche 7 bis 9 umfasst, wenn das Programm auf einem Computer ausgeführt wird.

12. Speichermedium, das durch einen Computer lesbar ist, auf dem ein Computerprogramm gespeichert ist, das Anweisungen für die Ausführung der Schritte des Verfahrens zur Decodierung nach einem der Ansprüche 7 bis 9 umfasst, wenn das Programm auf einem Computer ausgeführt wird.

## Claims

1. Method for coding at least one image ($IC_j$) subdivided into blocks, implementing, for a current block ($B_u$) to be coded, the steps of:

- predicting (C3) the current block in accordance with a prediction mode selected from among a plurality of predetermined prediction modes ($MP_0$, $MP_1$,..., $MP_v$,..., $MP_Q$),
- obtaining (C3) a predictor block ($BP_{opt}$),
- determining (C4) a block of residual data ($BR_u$) representative of the difference between the predictor block obtained and the current block, said residual data being likely to have an amplitude and a sign,
- calculating (C5) a transformed block ($Bt_u$) by transformation of the block of residual data,
- calculating (C6) a block of NxN quantized coefficients ($Bq_u$) by quantising the transformed block,
- covering (C7), in a predefined order, the quantized coefficients, after which a one-dimensional vector of $N^2$ coefficients ($\varepsilon_0$, $\varepsilon_1$,..., $\varepsilon_i$,..., $\varepsilon_N{}^2$-1) is obtained,
- entropically coding (C8) the amplitude information associated with each of said coefficients,
- scanning (C9) the $N^2$ coefficients in a predetermined order,
- selecting (C9), in said predetermined order, K first coefficients assigned a non-zero amplitude and a sign, in which K is a predetermined value such that $0 \leq K \leq N^2-1$,
- obtaining (C11) K predicted values ($Sp_1$, $Sp_2$,..., $Sp_K$) of the sign of, respectively, the K first coefficients scanned,
- calculating (C12) information representative of the difference between said K predicted sign values ($Sp_1$, $SP_2$,..., $Sp_K$) and, respectively, the corresponding sign values ($S_1$,$S_2$,..., $S_K$) of the K first coefficients scanned,
- coding (C13) said calculated information,
- coding (C10) the signs of the coefficients which have not been selected,

said coding method being **characterized in that** the scanning step (C9) selects said predetermined order as a function of said selected prediction mode.

2. Coding method according to Claim 1, wherein the step of obtaining said K predicted sign values is a function of previously coded then decoded pixels of the current image which are situated along (F) the current block.

3. Coding method according to Claim 1 or Claim 2, wherein the scanning and selection steps are implemented on the basis of a table (TA) which associates, with each of said predetermined prediction modes, an ordered list of said coefficients, the order of the coefficients of a list being variable from one prediction mode to another.

4. Device (CO) for coding at least one image subdivided into blocks, comprising, for a current block to be coded:

   - means (PRED1_CO) for predicting the current block in accordance with a prediction mode selected from among a plurality of predetermined prediction modes ($MP_0$, $MP_1$,..., $MP_v$,..., $MP_Q$),
   - means (PRED1_CO) for determining a block of residual data ($BR_u$) representative of the difference between a predictor block, obtained following the activation of said prediction means, and the current block, said residual data being likely to have an amplitude and a sign,
   - means (MT_CO) for calculating a transformed block ($Bt_u$) by transformation of the block of residual data,
   - means (MQ_CO) for calculating a block of NxN quantized coefficients ($Bq_u$) by quantization of the transformed block,
   - means (ML CO) for covering, in a predefined order, the quantized coefficients, after which a one-dimensional vector of $N^2$ coefficients ($\varepsilon_0$, $\varepsilon_1$,..., $\varepsilon_i$,..., $\varepsilon_{N^2-1}$) is obtained,
   - means (MCE) for entropically coding the amplitude information associated with each of said coefficients,
   - means for scanning the $N^2$ coefficients in a predetermined order,
   - means (SEL CO) for selecting, in said predetermined order, K first coefficients assigned a non-zero amplitude and a sign, in which K is a predetermined value such that $0 \leq K \leq N^2-1$,
   - means (PRED2_CO) for obtaining K predicted values of the sign of, respectively, the K first coefficients scanned,
   - means (CAL_CO) for calculating information (Id) representative of the difference between said K predicted sign values and the corresponding sign values of the K first coefficients scanned,
   - means (MCI_CO) for coding said calculated information,
   - means (MCS_CO) for coding the signs of the coefficients which have not been selected,

   said coding device being **characterized in that** the scanning means select said predetermined order as a function of said selected prediction mode.

5. Computer program comprising program code instructions for executing the steps of the coding method according to any one of Claims 1 to 3, when said program is run on a computer.

6. Computer-readable storage medium on which is stored a computer program comprising instructions for executing the steps of the coding method according to any one of Claims 1 to 3, when said program is run on a computer.

7. Method for decoding a data signal ($\varphi$) representative of at least one image ($IC_j$) subdivided into blocks, implementing, for a current block ($B_u$) to be decoded, the steps of:

   - determining (D2), in said data signal, a one-dimensional vector of $N^2$ quantized coefficients ($\varepsilon_0$, $\varepsilon_1$,..., $\varepsilon_i$,..., $\varepsilon_{N^2-1}$) relating to said current block, at least one coefficient of said vector being assigned an amplitude and a sign,
   - predicting (D3) the current block in accordance with a prediction mode selected from among a plurality of predetermined prediction modes ($MP_0$, $MP_1$,..., $MP_v$,..., $MP_Q$),
   - entropically decoding (D4) the amplitude information associated with each of said $N^2$ coefficients,
   - scanning (D5) the $N^2$ coefficients in a predetermined order,
   - selecting (D5), in said predetermined order, K first coefficients assigned a non-zero amplitude and a sign, in which K is a predetermined value such that $0 \leq K \leq N^2-1$,
   - obtaining (D7) K predicted values ($Sp_1$, $SP_2$,..., $Sp_K$) of the sign of, respectively, the K first coefficients scanned,
   - determining (D8), in said data signal ($\varphi$), information (Id) representative of the difference between said K predicted sign values ($Sp_1$, $SP_2$,..., $Sp_K$) and, respectively, the corresponding sign values ($S_1$, $S_2$,..., $S_K$) of the K first coefficients scanned,
   - reconstructing (D9) the K signs using the K predicted sign values and said corresponding representative information,
   - decoding (D6) the signs of the coefficients which have not been selected,
   - calculating (D10) a decoded dequantized block ($BDt_u$) by dequantization of the one-dimensional vector,
   - calculating (D11) a decoded residual block ($BDr_u$) by transformation of the decoded dequantized block,

- reconstructing (D12) the current block by adding to the decoded residual block a predictor block obtained at the end of said prediction,

said decoding method being **characterized in that** the scanning step (D5) selects said predetermined order as a function of said selected prediction mode.

8. Decoding method according to Claim 7, wherein the step of obtaining said K predicted sign values is a function of previously decoded pixels of the current image which are situated along (F) the current block.

9. Decoding method according to Claim 7 or Claim 8, wherein the scanning and selection steps are implemented on the basis of a table (TA) which associates, with a determined prediction mode, an ordered list of said coefficients, the order of the coefficients of a list being variable from one prediction mode to another.

10. Device (DO) for decoding a data signal ($\varphi$) representative of at least one image ($IC_j$) subdivided into blocks, comprising, for a current block to be decoded:

- means (MI_DO) for determining, in said data signal, a one-dimensional vector of $N^2$ quantized coefficients ($\varepsilon_0$, $\varepsilon_1$,..., $\varepsilon_i$,..., $\varepsilon_{N^2-1}$) relating to said current block, at least one coefficient of said vector being assigned an amplitude and a sign,
- means (PRED1_DO) for predicting the current block in accordance with a prediction mode selected from among a plurality of predetermined prediction modes ($MP_0$, $MP_1$,..., $MP_v$,..., $MP_Q$),
- means (MDE) for entropically decoding the amplitude information associated with each of said $N^2$ coefficients,
- means for scanning the $N^2$ coefficients in a predetermined order,
- means (SEL DO) for selecting, in said predetermined order, K first coefficients assigned a non-zero amplitude and a sign, in which K is a predetermined value such that $0 \leq K \leq N^2-1$,
- means (PRED2_DO) for obtaining K predicted values of the sign of, respectively, the K first coefficients scanned,
- means (ML DO) for determining, in said data signal, information (Id) representative of the difference between said K predicted sign values and, respectively, the corresponding sign values of the K first coefficients scanned,
- means (CAL_DO) for reconstructing the K signs using the K predicted sign values and said corresponding representative information,
- means (MDS DO) for decoding the signs of the coefficients which have not been selected,
- means ($MQ^{-1}$_DO) for calculating a decoded dequantized block ($BDt_u$) by dequantization of the one-dimensional vector,
- means ($MT^{-1}$_DO) for calculating a decoded residual block ($BDr_u$) by transformation of the decoded dequantized block,
- means ($PRED^{-1}$_DO) for reconstructing the current block by adding to the decoded residual block a predictor block obtained at the end of said prediction,

said decoding device being **characterized in that** the scanning means select said predetermined order as a function of said selected prediction mode.

11. Computer program comprising instructions for implementing the decoding method according to any one of Claims 7 to 9, when said decoding method is run on a computer.

12. Computer-readable storage medium on which is stored a computer program comprising instructions for executing the steps of the decoding method according to any one of Claims 7 to 9, when said program is run on a computer.

**Fig. 1**

Fig. 2

$IC_j$

$B_1$

$B_2$

$B_3$

$B_4$

**Fig. 3**

$IC_j$

colonne col

ligne lin

F

**Fig. 4**

$BD_u$

F

UT_DO

MT_DO

PG_DO

$RQ_1$
$\vdots$
$RQ_u$
$\vdots$
$RQ_S$

$RQ_u = (\varepsilon_0, \varepsilon_1, ..., \varepsilon_i, ..., \varepsilon_{N^2-1})$

MDS_DO

$Sp_1$
$Sp_2$
$\vdots$
$Sp_k$

$MQ^{-1}\_DO$

$MT^{-1}\_DO$

$\varphi$

$\mu P$

$BP_{opt}$

$L\{I_0, I_1, ..., I_z, ..., I_{K-1}\}$

$Sp_k$

$BDt_u$

$BDr_u$

UT_DO

MI_DO

PRED1_DO

MDE

SEL_DO

PRED2_DO

$PRED^{-1}DO$

$BD_u$

URI

$ID_j$

Id

DO

ML_DO

CAL_DO

EP 3 061 246 B1

**Fig. 5**

$\varphi$

IDENTIFICATION BLOCS RESIDUELS QUANTIFIES $RQ_1, RQ_2..., RQ_u,..., RQ_s$ — D1

SELECT. BLOC RESIDUEL QUANTIFIE COURANT $RQ_u$ — D2

$RQ_u = (\varepsilon_0, \varepsilon_1,..., \varepsilon_i,..., \varepsilon_{N^2-1})$

PREDICTION BLOC $B_u$ A DECODER / MODE DE PREDICTION SELECTIONNE PARMI PLUSIEURS MODES DE PREDICTION PREDETERMINES $MP_0, MP_1,..., MP_v,..., MP_Q \, 0 \leq v \leq Q+1$ — D3

$BP_{opt}$

DECOD. AMPLITUDE $RQ_u$ — D4

SELECTION AU MOINS UN COEFF. $\varepsilon_i$ D'AMPLITUDE $\neq 0$ ET DENSIGNE + / - SELON CRITERE PREDETERMINE FONCTION DU MODE DE PREDICTION SELECTIONNE — D5

$L\{I_0, I_1,..., I_z,..., I_{K-1}\}$

$I_z \in L$ ?  N / O  D7

PREDICTION DE SIGNES $S_1, S_2,..., S_K$  D8

$Sp_1, Sp_2,..., Sp_K$

LECTURE INFO. Id RELATIVE A LA DIFFERENCE ENTRE $Sp_1, Sp_2,..., Sp_K$ ET $S_1, S_2,..., S_K$

DECOD. SIGNES

DECOD. SIGNE(S) — D9

D6

$BDq_u$

DEQUANT. — D10

$BDt_u$

TRANSFORM. INVERSE — D11

$BDr_u$

$BP_{opt} + BDr_u$ — D12

$BD_u$

ECRITURE BLOC DECODE $BD_u$ DANS IMAGE DECOEE $IDC_j$ — D13

$1 \leq u \leq S$

D14 — DERNIER BLOC IMAGE $IDC_j$ ? N / O

STOP — D15

**Fig. 6**

# EP 3 061 246 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **NIKOLAY N. PONOMARENKO ; ANDRIY V. BAZHYNA ; KAREN O. EGIAZARIAN.** Prediction of signs of DCT coefficients in block-based lossy image compression. *Proc. SPIE 6497, Image Processing: Algorithms and Systems V, 64970L,* 27 Février 2007

- Video coding technology proposai by Fujitsu. *JCTVC-A115, 1. JCT-VC MEETING (JOINT COLLABORATIVE TEAM ON VIDEO CODING OF ISO/IEC JTC1/SC29/WG11 AND ITU-TSG.16),* 12 Avril 2010, HTTP://WFTP3.ITU.INT/AV-ARCH/JCTVC-SITE
- **B. BROSS ; W.-J. HAN ; J.-R. OHM ; G. J. SULLIVAN ; T. WIEGAND.** High efficiency video coding (HEVC) text specification draft 10. *JCTVC-L1003 of JCT-VC, Genève, CH,* 14 Janvier 2013